(19) Europäisches Patentamt
European Patent Office
Office européen des brevets

(11) **EP 4 455 245 A1**

(12) **EUROPEAN PATENT APPLICATION**
published in accordance with Art. 153(4) EPC

(43) Date of publication:
**30.10.2024 Bulletin 2024/44**

(21) Application number: **22910631.5**

(22) Date of filing: **07.11.2022**

(51) International Patent Classification (IPC):
**C09J 133/06** (2006.01)  **C09J 7/38** (2018.01)
**C09J 11/06** (2006.01)  **C09J 133/20** (2006.01)

(52) Cooperative Patent Classification (CPC):
**C09J 7/38; C09J 11/06; C09J 133/06; C09J 133/20**

(86) International application number:
**PCT/JP2022/041379**

(87) International publication number:
**WO 2023/119911 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2021 JP 2021206276**
**06.05.2022 JP 2022076759**

(71) Applicant: **Nippon Carbide Industries Co., Inc.**
**Tokyo 108-8466 (JP)**

(72) Inventors:
• **KANEKO, Yuya**
**Namerikawa-shi, Toyama 936-8555 (JP)**

• **SAKAGUCHI, Akihiro**
**Namerikawa-shi, Toyama 936-8555 (JP)**
• **TAKETOSHI, Satoshi**
**Namerikawa-shi, Toyama 936-8555 (JP)**
• **FUKUDA, Tatsuki**
**Namerikawa-shi, Toyama 936-8555 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **PRESSURE-SENSITIVE ADHESIVE COMPOSITION, PRODUCTION METHOD THEREFOR, PRESSURE-SENSITIVE ADHESIVE LAYER, AND PRESSURE-SENSITIVE ADHESIVE SHEET**

(57)    A pressure-sensitive adhesive composition, including: (meth)acrylic resin particles having an average particle diameter of from 5 nm to 160 nm and containing a constituent unit (A) derived from an alkyl (meth)acrylate monomer, a constituent unit (B) derived from (meth)acrylonitrile, a constituent unit (C) derived from a (meth)acrylic monomer having a carboxy group, and a constituent unit (D) derived from a reactive surfactant, in which a content ratio of the constituent unit (B) is from 10 mass% to 25 mass% with respect to all the constituent units excluding the constituent unit (D), a content ratio of the constituent unit (C) is from 0.2 mass% to 6.0 mass% with respect to all the constituent units excluding the constituent unit (D), and a content amount of the constituent unit (D) is from 0.1 parts by mass to 1.0 part by mass with respect to 100 parts by mass of all the constituent units excluding the constituent unit (D); and water.

EP 4 455 245 A1

**Description**

TECHNICAL FIELD

The present disclosure relates to a pressure-sensitive adhesive composition and a method for producing the same, a pressure-sensitive adhesive layer, and a pressure-sensitive adhesive sheet.

BACKGROUND ART

These days, due to growing interest in environmental problems, development of a pressure-sensitive adhesive not using an organic solvent is demanded even more.

A water-based pressure-sensitive adhesive is a typical example thereof; for example, Japanese Patent Application Laid-Open (JP-A) No. 2010-209170 discloses, as a pressure-sensitive adhesive tape using a water-based pressure-sensitive adhesive, a pressure-sensitive adhesive tape having a pressure-sensitive adhesive layer made of an aqueous dispersion-type acrylic pressure-sensitive adhesive composition that contains acrylic copolymer emulsion particles and a crosslinking agent in an aqueous medium, in which the acrylic copolymer forming the acrylic copolymer emulsion particles contains, as monomer components, a (meth)acrylate having an alkyl group having from 2 to 14 carbon atoms, acrylic acid, methacrylic acid, and a nitrogen-containing vinyl monomer, and the gel fraction of the pressure-sensitive adhesive layer is from 20% to 38%.

Further, JP-A No. 2009-57508 discloses, as an adhesive that can take the place of a solvent-type adhesive using an organic solvent as a solvent, an aqueous emulsion adhesive containing a copolymer composed of from 87 mass% to 99.4 mass% of an acid group-free monomer (a), from 0.5 mass% to 10 mass% of an acid group-containing monomer (b), from 0.1 mass% to 3 mass% of a hydroxy group-containing (meth)acrylamide-based monomer (c), and from 0.05 parts by mass to 10 parts by mass of a silane coupling agent (d) having a polymerizable double bond per 100 parts by mass of the total amount of the monomer (a), the monomer (b), and the monomer (c).

SUMMARY OF INVENTION

Technical Problem

The water-based pressure-sensitive adhesive is used for building material uses from the viewpoint of preventing a sick house syndrome, and is frequently used particularly for uses of attachment of wallpaper. Meanwhile, it is considered that the water-based pressure-sensitive adhesive is not suitable for uses in water areas such as bathrooms, kitchens, washrooms, or toilets, uses of attachment to top plates, or the like.

In general, a pressure-sensitive adhesive layer formed from a water-based pressure-sensitive adhesive has poor water resistance; for example, when immersed in water, such a pressure-sensitive adhesive layer can experience an appearance change such as swelling or whitening. Further, even if a pressure-sensitive adhesive formed from a water-based pressure-sensitive adhesive has cohesive force capable of withstanding stress in a shear direction (what is called a direction parallel to the pressure-sensitive adhesive layer), the pressure-sensitive adhesive is weak against stress in a direction perpendicular to the bonding surface, and is likely to be peeled off.

Thus, the water-based pressure-sensitive adhesive is required to be capable of forming a pressure-sensitive adhesive layer that is excellent in water resistance and can withstand a load in a direction perpendicular to the bonding surface. In addition, the water-based pressure-sensitive adhesive is required to be capable of forming a pressure-sensitive adhesive layer that has high pressure-sensitive adhesive force not only in a room temperature environment but also in a wet heat environment.

An issue to be solved by an embodiment of the disclosure is to provide a pressure-sensitive adhesive composition capable of forming a pressure-sensitive adhesive layer that has high pressure-sensitive adhesive force even in a wet heat environment, is excellent in water resistance, and can withstand a load in a direction perpendicular to the bonding surface.

An issue to be solved by another embodiment of the disclosure is to provide a method for producing the pressure-sensitive adhesive composition.

An issue to be solved by still another embodiment of the disclosure is to provide a pressure-sensitive adhesive layer that has high pressure-sensitive adhesive force even in a wet heat environment, is excellent in water resistance, and can withstand a load in a direction perpendicular to the bonding surface.

An issue to be solved by still another embodiment of the disclosure is to provide a pressure-sensitive adhesive sheet including the pressure-sensitive adhesive layer.

Solution To Problem

Specific solution to problem includes the following embodiments.

<1> A pressure-sensitive adhesive composition, comprising:

(meth)acrylic resin particles having an average particle diameter of from 5 nm to 160 nm and containing a constituent unit (A) derived from an alkyl (meth)acrylate monomer, a constituent unit (B) derived from (meth)acrylonitrile, a constituent unit (C) derived from a (meth)acrylic monomer having a carboxy group, and a constituent unit (D) derived from a reactive surfactant, in which a content ratio of the constituent unit (B) is from 10 mass% to 25 mass% with respect to all the constituent units excluding the constituent unit (D), a content ratio of the constituent unit (C) is from 0.2 mass% to 6.0 mass% with respect to all the constituent units excluding the constituent unit (D), and a content amount of the constituent unit (D) is from 0.1 parts by mass to 1.0 part by mass with respect to 100 parts by mass of all the constituent units excluding the constituent unit (D); and water.

<2> The pressure-sensitive adhesive composition according to <1>, further comprising a crosslinking agent.
<3> The pressure-sensitive adhesive composition according to <2>, wherein the crosslinking agent is at least one selected from a carbodiimide-based crosslinking agent or an oxazoline-based crosslinking agent.
<4> The pressure-sensitive adhesive composition according to any one of <1> to <3>, wherein the reactive surfactant is at least one selected from the group consisting of an anionic reactive surfactant and a nonionic reactive surfactant.
<5> The pressure-sensitive adhesive composition according to any one of <1> to <4>, wherein the (meth)acrylic resin particles are free of a constituent unit derived from a (meth)acrylamide having a hydroxy group, or have a content ratio of a constituent unit derived from a (meth)acrylamide having a hydroxy group in a range of from more than 0 mass% to less than 0.1 mass% with respect to all the constituent units excluding the constituent unit (D) of the (meth)acrylic resin particles.
<6> The pressure-sensitive adhesive composition according to any one of <1> to <5>, wherein a glass transition temperature of the (meth)acrylic resin particles is from -70°C to 30°C.
<7> A pressure-sensitive adhesive layer formed from the pressure-sensitive adhesive composition according to any one of <1> to <6>, the pressure-sensitive adhesive layer comprising a (meth)acrylic resin containing a constituent unit (A) derived from an alkyl (meth)acrylate monomer, a constituent unit (B) derived from (meth)acrylonitrile, a constituent unit (C) derived from a (meth)acrylic monomer having a carboxy group, and a constituent unit (D) derived from a reactive surfactant, in which a content ratio of the constituent unit (B) is from 10 mass% to 25 mass% with respect to all the constituent units excluding the constituent unit (D), a content ratio of the constituent unit (C) is from 0.2 mass% to 6.0 mass% with respect to all the constituent units excluding the constituent unit (D), and a content amount of the constituent unit (D) is from 0.1 parts by mass to 1.0 part by mass with respect to 100 parts by mass of all the constituent units excluding the constituent unit (D).
<8> A pressure-sensitive adhesive sheet, comprising the pressure-sensitive adhesive layer according to <7>.
<9> A method for producing the pressure-sensitive adhesive composition according to any one of <1> to <6>, the method comprising a step of producing (meth)acrylic resin particles by performing emulsion polymerization of at least an alkyl (meth)acrylate monomer, (meth)acrylonitrile, a (meth)acrylic monomer having a carboxy group, and a reactive surfactant using a chain transfer agent.

Advantageous Effects of Invention

According to an embodiment of the disclosure, there is provided a pressure-sensitive adhesive composition capable of forming a pressure-sensitive adhesive layer that has high pressure-sensitive adhesive force even in a wet heat environment, is excellent in water resistance, and can withstand a load in a direction perpendicular to the bonding surface.
According to another embodiment of the disclosure, there is provided a method for producing the pressure-sensitive adhesive composition.
According to still another embodiment of the disclosure, there is provided a pressure-sensitive adhesive layer that has high pressure-sensitive adhesive force even in a wet heat environment, is excellent in water resistance, and can withstand a load in a direction perpendicular to the bonding surface.
According to still another embodiment of the disclosure, there is provided a pressure-sensitive adhesive sheet including the pressure-sensitive adhesive layer.

DESCRIPTION OF EMBODIMENTS

Hereinbelow, a pressure-sensitive adhesive composition and a method for producing the same, a pressure-sensitive adhesive layer, and a pressure-sensitive adhesive sheet of the disclosure are described in detail. Although the description of the requirements described below may be made based on typical embodiments of the disclosure, the disclosure is not limited to such embodiments, and can be implemented with alterations within the scope of the object of the disclosure, as appropriate.

In the disclosure, a numerical range specified using "to" means a range including the numerical values written before and after "to" as the lower limit value and the upper limit value, respectively.

For numerical ranges specified in a stepwise manner in the disclosure, the upper limit value or the lower limit value written in a numerical range may be replaced with the upper limit value or the lower limit value of another numerical range specified in a stepwise manner. Further, for the numerical ranges shown in the disclosure, the upper limit value or the lower limit value written in a numerical range may be replaced with a value shown in Examples.

In the disclosure, a combination of two or more preferred aspects is a more preferred aspect.

In the disclosure, for the amount of each component in the pressure-sensitive adhesive composition, in the case in which there are a plurality of substances falling under each component in the pressure-sensitive adhesive composition, the amount of the component means the total amount of the plurality of substances present in the pressure-sensitive adhesive composition unless otherwise specified. The same applies to the amount of each component in the pressure-sensitive adhesive layer.

In the disclosure, the "(meth)acrylic monomer" means a monomer having a (meth)acryloyl group.

In the disclosure, the "(meth)acrylic resin" means a resin in which the content ratio of a constituent unit derived from a monomer having a (meth)acryloyl group is 50 mass% or more with respect to all the constituent units (that is, all the constituent units of the resin).

The "monomer" in the disclosure does not include a reactive surfactant.

In the disclosure, "(meth)acryl" is a term including both "acryl" and "methacryl", "(meth)acrylate" is a term including both "acrylate" and "methacrylate", and "(meth)acryloyl" is a term including both "acryloyl" and "methacryloyl".

In the disclosure, "n-" means normal, "i-" means iso, "s-" means secondary, and "t-" means tertiary.

In the disclosure, the "pressure-sensitive adhesive" and the "pressure-sensitive adhesive composition" have the same meaning.

[Pressure-sensitive Adhesive Composition]

The pressure-sensitive adhesive composition of the disclosure contains: (meth)acrylic resin particles having an average particle diameter of from 5 nm to 160 nm and containing a constituent unit (A) derived from an alkyl (meth)acrylate monomer, a constituent unit (B) derived from (meth)acrylonitrile, a constituent unit (C) derived from a (meth)acrylic monomer having a carboxy group, and a constituent unit (D) derived from a reactive surfactant, in which the content ratio of the constituent unit (B) is from 10 mass% to 25 mass% with respect to all the constituent units excluding the constituent unit (D), the content ratio of the constituent unit (C) is from 0.2 mass% to 6.0 mass% with respect to all the constituent units excluding the constituent unit (D), the content amount of the constituent unit (D) is from 0.1 parts by mass to 1.0 part by mass with respect to 100 parts by mass of all the constituent units excluding the constituent unit (D); and water.

By using the pressure-sensitive adhesive composition of the disclosure, a pressure-sensitive adhesive layer that has high pressure-sensitive adhesive force even in a wet heat environment, is excellent in water resistance, and can withstand a load in a direction perpendicular to the bonding surface can be formed.

The reason why the pressure-sensitive adhesive composition of the disclosure can exhibit such effects is not clear, but the present inventors surmise as follows. However, the following surmise is not a restrictive interpretation of the pressure-sensitive adhesive composition of the disclosure, and is described as an example.

Since the pressure-sensitive adhesive composition of the disclosure contains resin particles having relatively small particle diameters, specifically an average particle diameter of 160 nm or less, the resin particles tend to be densely arranged during the step of drying the coating film of the pressure-sensitive adhesive composition. By the resin particles being densely arranged, the smoothness of the surface of the formed pressure-sensitive adhesive layer will be enhanced, and water is less likely to permeate into the pressure-sensitive adhesive layer. It is presumed that, due to this, the pressure-sensitive adhesive layer formed from the pressure-sensitive adhesive composition of the disclosure is excellent in water resistance and is less likely to experience an appearance change such as swelling or whitening even in a humid environment.

A reactive surfactant is present on the surface of a pressure-sensitive adhesive layer formed using a pressure-sensitive adhesive composition containing resin particles containing a constituent unit derived from the reactive surfactant. Thus, even if the surface of the pressure-sensitive adhesive layer has smoothness, when water adheres to the pressure-sensitive adhesive layer, the reactive surfactant may be dissolved in water, and consequently a phenomenon in which water permeates into the pressure-sensitive adhesive layer may occur. In this respect, in the pressure-sensitive adhesive composition of the disclosure, it is presumed that, since the amount of a constituent unit derived from a reactive surfactant contained in the resin particles is small, permeation of water due to dissolution of the reactive surfactant is suppressed and excellent water resistance is maintained in the formed pressure-sensitive adhesive layer.

In a pressure-sensitive adhesive layer formed using a pressure-sensitive adhesive composition containing resin particles containing a constituent unit derived from (meth)acrylonitrile, (meth)acrylonitrile is present in a polarized state due to its structure. When (meth)acrylonitrile is polarized, electrostatic interaction will occur between the pressure-sensitive adhesive layer and the substrate and between the pressure-sensitive adhesive layer and the adherend, and adhesion between the pressure-sensitive adhesive layer, and the substrate and the adherend will be enhanced. In the pressure-sensitive adhesive composition of the disclosure, it is presumed that, since the resin particles contain a constituent unit derived from (meth)acrylonitrile at a specific ratio or more, the above interaction occurs more effectively. Thus, the formed pressure-sensitive adhesive layer will have high pressure-sensitive adhesive force even in a wet heat environment, and can withstand a load in a direction perpendicular to the bonding surface. In this regard, since (meth)acrylonitrile has a cyano group, which is a hydrophilic group, if the resin particles excessively contain a constituent unit derived from (meth)acrylonitrile, the water resistance of the formed pressure-sensitive adhesive layer is likely to be impaired. In this respect, in the pressure-sensitive adhesive composition of the disclosure, since the ratio of a constituent unit derived from (meth)acrylonitrile contained in the resin particles is a specific ratio or less, the amount of cyano groups will not be excessive. It is presumed that, due to this, an impairment in water resistance is suppressed and excellent water resistance is maintained in the formed pressure-sensitive adhesive layer.

The resin particles contained in the pressure-sensitive adhesive composition of the disclosure are excellent in dispersibility by having an average particle diameter of 5 nm or more and containing a constituent unit derived from a (meth)acrylic monomer having a carboxy group at a specific ratio. It is presumed that, due to this, the pressure-sensitive adhesive composition of the disclosure can exhibit the above effects more effectively.

It is surmised that, from the above, the pressure-sensitive adhesive composition of the disclosure has high pressure-sensitive adhesive force even in a wet heat environment, is excellent in water resistance, and can withstand a load in a direction perpendicular to the bonding surface.

Hereinafter, the "(meth)acrylic resin particles having an average particle diameter of from 5 nm to 160 nm and containing a constituent unit (A) derived from an alkyl (meth)acrylate monomer, a constituent unit (B) derived from (meth)acrylonitrile, a constituent unit (C) derived from a (meth)acrylic monomer having a carboxy group, and a constituent unit (D) derived from a reactive surfactant, in which the content ratio of the constituent unit (B) is from 10 mass% to 25 mass% with respect to all the constituent units excluding the constituent unit (D), the content ratio of the constituent unit (C) is from 0.2 mass% to 6.0 mass% with respect to all the constituent units excluding the constituent unit (D), the content amount of the constituent unit (D) is from 0.1 parts by mass to 1.0 part by mass with respect to 100 parts by mass of all the constituent units excluding the constituent unit (D)" contained in the pressure-sensitive adhesive composition of the disclosure are also referred to as "specific (meth)acrylic resin particles".

[Specific (Meth)acrylic Resin Particles]

The pressure-sensitive adhesive composition of the disclosure contains (meth)acrylic resin particles [that is, the specific (meth)acrylic resin particles] having an average particle diameter of from 5 nm to 160 nm and containing a constituent unit (A) derived from an alkyl (meth)acrylate monomer, a constituent unit (B) derived from (meth)acrylonitrile, a constituent unit (C) derived from a (meth)acrylic monomer having a carboxy group, and a constituent unit (D) derived from a reactive surfactant, in which the content ratio of the constituent unit (B) is from 10 mass% to 25 mass% with respect to all the constituent units excluding the constituent unit (D), the content ratio of the constituent unit (C) is from 0.2 mass% to 6.0 mass% with respect to all the constituent units excluding the constituent unit (D), the content amount of the constituent unit (D) is from 0.1 parts by mass to 1.0 part by mass with respect to 100 parts by mass of all the constituent units excluding the constituent unit (D). In the pressure-sensitive adhesive composition of the disclosure, the specific (meth)acrylic resin particles are present in a state of being dispersed in a medium containing water.

The pressure-sensitive adhesive composition of the disclosure may contain only one kind of specific (meth)acrylic resin particles, or may contain two or more kinds of specific (meth)acrylic resin particles.

<Constituent Unit (A) Derived from Alkyl (meth)acrylate Monomer>

The specific (meth)acrylic resin particles contain a constituent unit (A) derived from an alkyl (meth)acrylate monomer.

In the disclosure, the "constituent unit derived from an alkyl (meth)acrylate monomer" means a constituent unit formed by addition polymerization of an alkyl (meth)acrylate monomer. The "alkyl (meth)acrylate monomer" in the disclosure does not include a monomer falling under a (meth)acrylic monomer having a carboxy group described later.

The type of the alkyl (meth)acrylate monomer is not particularly limited.

The alkyl (meth)acrylate monomer may be an alkyl acrylate monomer, or may be an alkyl methacrylate monomer.
The alkyl (meth)acrylate monomer may be one in which the alkyl group is unsubstituted or substituted, but is preferably an alkyl (meth)acrylate monomer in which the alkyl group is unsubstituted.
The alkyl group contained in the alkyl (meth)acrylate monomer may be linear, branched, or cyclic.
The number of carbon atoms of the alkyl group contained in the alkyl (meth)acrylate monomer is not particularly limited, but is, for example, preferably from 1 to 18, more preferably from 2 to 14, and still more preferably from 2 to 8.
Specific examples of the alkyl (meth)acrylate monomer include methyl (meth)acrylate, ethyl (meth)acrylate, n-butyl (meth)acrylate, i-butyl (meth)acrylate, s-butyl (meth)acrylate, t-butyl (meth)acrylate, n-hexyl (meth)acrylate, n-octyl (meth)acrylate, i-octyl (meth)acrylate, 2-ethylhexyl (meth)acrylate, n-nonyl (meth)acrylate, i-nonyl (meth)acrylate, n-decyl (meth)acrylate, lauryl (meth)acrylate, stearyl (meth)acrylate, cyclohexyl (meth)acrylate, and isobornyl (meth)acrylate.
The alkyl (meth)acrylate monomer is preferably at least one selected from the group consisting of n-butyl acrylate (n-BA), 2-ethylhexyl acrylate (2EHA), and methyl methacrylate (MMA), and more preferably n-butyl acrylate (n-BA).
The specific (meth)acrylic resin particles may contain only one kind of the constituent unit (A), or may contain two or more kinds of the constituent unit (A).
The content ratio of the constituent unit (A) in the specific (meth)acrylic resin particles is not particularly limited, but is, for example, preferably from 50 mass% to 89.8 mass%, more preferably from 55 mass% to 89.8 mass%, still more preferably from 60 mass% to 89.8 mass%, particularly preferably from 65 mass% to 89.8 mass%, and most preferably from 69 mass% to 85.2 mass% with respect to all the constituent units excluding the constituent unit (D) of the specific (meth)acrylic resin particles.
Here, the fact that the content ratio of the constituent unit (A) in the specific (meth)acrylic resin particles is 50 mass% or more with respect to all the constituent units excluding the constituent unit (D) of the specific (meth)acrylic resin particles means that the constituent unit (A) is contained as a main component of the constituent units contained in the specific (meth)acrylic resin particles.

<Constituent Unit (B) Derived from (Meth)acrylonitrile>

The specific (meth)acrylic resin particles contain a constituent unit (B) derived from (meth)acrylonitrile. In the disclosure, the "constituent unit derived from (meth)acrylonitrile" means a constituent unit formed by addition polymerization of (meth)acrylonitrile.
The constituent unit (B) may be a constituent unit derived from methacrylonitrile, or may be a constituent unit derived from acrylonitrile.
The specific (meth)acrylic resin particles contain, as the constituent unit (B), at least one of a constituent unit derived from methacrylonitrile or a constituent unit derived from acrylonitrile, preferably either one of a constituent unit derived from methacrylonitrile and a constituent unit derived from acrylonitrile, and more preferably a constituent unit derived from methacrylonitrile.
The content ratio of the constituent unit (B) in the specific (meth)acrylic resin particles is from 10 mass% to 25 mass% with respect to all the constituent units excluding the constituent unit (D) of the specific (meth)acrylic resin particles.
When the content ratio of the constituent unit (B) in the specific (meth)acrylic resin particles is 10 mass% or more with respect to all the constituent units excluding the constituent unit (D) of the specific (meth)acrylic resin particles, the formed pressure-sensitive adhesive layer tends to be capable of withstanding a load in a direction perpendicular to the bonding surface. The reason is presumably as follows. It is surmised that, in the pressure-sensitive adhesive layer, (meth)acrylonitrile is present in a polarized state due to its structure. It is presumed that this is because, by (meth)acrylonitrile being polarized, electrostatic interaction occurs between the pressure-sensitive adhesive layer and the substrate and between the pressure-sensitive adhesive layer and the adherend, and adhesion between the pressure-sensitive adhesive layer, and the substrate and the adherend is sufficiently enhanced. From such a point of view, the content ratio of the constituent unit (B) in the specific (meth)acrylic resin particles is 10 mass% or more, preferably 15 mass% or more, and more preferably 20 mass% or more with respect to all the constituent units excluding the constituent unit (D) of the specific (meth)acrylic resin particles.
When the content ratio of the constituent unit (B) in the specific (meth)acrylic resin particles is 25 mass% or less with respect to all the constituent units excluding the constituent unit (D) of the specific (meth)acrylic resin particles, the formed pressure-sensitive adhesive layer tends to be excellent in water resistance. The reason is presumably as follows. It is presumed that this is because, in the formed pressure-sensitive adhesive layer, an impairment in water resistance is suppressed by virtue of the fact that the number of cyano groups, which are hydrophilic groups derived from (meth)acrylonitrile, is not excessive, and excellent water resistance is maintained.

In an aspect, the content ratio of the constituent unit (B) in the specific (meth)acrylic resin particles may be from 15 mass% to 25 mass% with respect to all the constituent units excluding the constituent unit (D) of the specific (meth)acrylic resin particles.

<Constituent Unit (C) Derived from (Meth)acrylic Monomer Having Carboxy Group>

The specific (meth)acrylic resin particles contain a constituent unit (C) derived from a (meth)acrylic monomer having a carboxy group. In the disclosure, the "constituent unit derived from a (meth)acrylic monomer having a carboxy group" means a constituent unit formed by addition polymerization of a (meth)acrylic monomer having a carboxy group.

The type of the (meth)acrylic monomer having a carboxy group is not particularly limited.

Specific examples of the (meth)acrylic monomer having a carboxy group include methacrylic acid, acrylic acid, ω-carboxy-polycaprolactone monomethacrylate, and ω-carboxy-polycaprolactone monoacrylate.

As the (meth)acrylic monomer having a carboxy group, acrylic acid is preferable.

The specific (meth)acrylic resin particles may contain only one kind of the constituent unit (C), or may contain two or more kinds of the constituent unit (C).

From the viewpoint of dispersion stability of the resin particles, the content ratio of the constituent unit (C) in the specific (meth)acrylic resin particles is from 0.2 mass% to 6.0 mass%, preferably from 0.5 mass% to 6.0 mass%, more preferably from 1.0 mass% to 6.0 mass%, still more preferably from 2.0 mass% to 6.0 mass%, and particularly preferably from 4.8 mass% to 6.0 mass% with respect to all the constituent units excluding the constituent unit (D) of the specific (meth)acrylic resin particles.

Further, the carboxy group derived from the constituent unit (C) of the specific (meth)acrylic resin particles contributes to crosslinking reaction with a crosslinking agent; thus, in the case in which the pressure-sensitive adhesive composition of the disclosure contains a crosslinking agent, when the content ratio of the constituent unit (C) in the specific (meth)acrylic resin particles is 0.2 mass% or more with respect to all the constituent units excluding the constituent unit (D) of the specific (meth)acrylic resin particles, the cohesive force of the formed pressure-sensitive adhesive layer is enhanced, and the load bearing capacity in the perpendicular direction can be improved more.

<Constituent Unit (D) Derived from Reactive Surfactant>

The specific (meth)acrylic resin particles contain a constituent unit (D) derived from a reactive surfactant. In the disclosure, the "reactive surfactant" refers to a surfactant having an ethylenically unsaturated double bond. In the disclosure, the "constituent unit derived from a reactive surfactant" means a constituent unit formed by addition polymerization of a reactive surfactant.

The type of the reactive surfactant is not particularly limited.

The reactive surfactant may be an anionic reactive surfactant, may be a nonionic reactive surfactant, or may be a cationic reactive surfactant.

The reactive surfactant is preferably at least one selected from the group consisting of anionic reactive surfactants and nonionic reactive surfactants, and more preferably a combination of at least one selected from anionic reactive surfactants and at least one selected from nonionic reactive surfactants.

The reactive surfactant preferably has an oxyalkylene group and an ethylenically unsaturated double bond.

Specific examples of the oxyalkylene group include an oxyethylene group, an oxypropylene group, and an oxybutylene group.

The oxyalkylene group is, for example, preferably an oxyethylene group from the viewpoint of high reactivity with the monomer.

The average number of moles of oxyalkylene groups added is not particularly limited.

The average number of moles of oxyalkylene groups added is, for example, preferably from 5 to 50, more preferably from 5 to 40, and still more preferably from 10 to 30 from the viewpoint of dispersibility of the specific (meth)acrylic resin particles.

For example, in the case in which the specific (meth)acrylic resin particles contain two or more kinds of the constituent unit (D), as an aspect of the reactive surfactant, an aspect in which at least one reactive surfactant is an anionic reactive surfactant having an average number of moles of oxyethylene groups added of from 10 to 15 and at least one reactive surfactant is a nonionic reactive surfactant having an average number of moles of oxyethylene groups added of from 20 to 30 is preferable.

The reactive surfactant having an ethylenically unsaturated double bond can be obtained by adding a group having an ethylenically unsaturated double bond to a surfactant.

Specific examples of the group having an ethylenically unsaturated double bond include a (meth)acryloyl group, a vinyl group, an allyl group, an isopropenyl group, a 1-propenyl group, an allyloxy group, and a styryl group.

The group having an ethylenically unsaturated double bond is, for example, preferably a 1-propenyl group or an allyl group from the viewpoint of high reactivity with the monomer.

As the reactive surfactant, a commercially available product can be used.

Examples of commercially available products of the anionic reactive surfactant include "AQUALON KH-05" [active ingredient: ammonium polyoxyethylene-1-(allyloxymethyl) alkyl ether sulfate (type of the oxyalkylene group: an oxyethylene group, the average number of moles added: 5), active ingredient concentration: 99 mass%], "AQUALON KH-10" [active ingredient: ammonium polyoxyethylene-1-(allyloxymethyl) alkyl ether sulfate (type of the oxyalkylene group: an oxyethylene group, the average number of moles added: 10), active ingredient concentration: 99 mass%], "AQUALON AR-10" [active ingredient: ammonium polyoxyethylene styrenated propenylphenyl ether sulfate (type of the oxyalkylene group: an oxyethylene group, the average number of moles added: 10), active ingredient concentration: 99 mass%], "AQUALON HS-10" [active ingredient: ammonium polyoxyethylene nonylpropenylphenyl ether sulfate (type of the oxyalkylene group: an oxyethylene group, the average number of moles added: 10), active ingredient concentration: 99 mass%], "AQUALON BC-10" [active ingredient: ammonium polyoxyethylene nonylpropenylphenyl ether sulfate (type of the oxyalkylene group: an oxyethylene group, the average number of moles added: 10), active ingredient concentration: 99 mass%], "AQUALON AR-20" [active ingredient: ammonium polyoxyethylene styrenated propenylphenyl ether sulfate (type of the oxyalkylene group: an oxyethylene group, the average number of moles added: 20), active ingredient concentration: 99 mass%], and "AQUALON BC-20" [active ingredient: ammonium polyoxyethylene nonylpropenylphenyl ether sulfate (type of the oxyalkylene group: an oxyethylene group, the average number of moles added: 20), active ingredient concentration: 99 mass%] manufactured by DKS Co. Ltd., and "ADEKAREASOAP SR-10" [active ingredient: ammonium polyoxyethylene-1-(allyloxymethyl) alkyl ether sulfate (type of the oxyalkylene group: an oxyethylene group, the average number of moles added: 10), active ingredient concentration: 100 mass%], "ADEKA REASOAP SR-20" [active ingredient: ammonium polyoxyethylene-1-(allyloxymethyl) alkyl ether sulfate (type of the oxyalkylene group: an oxyethylene group, the average number of moles added: 20), active ingredient concentration: 100 mass%], and "ADEKA REASOAP SR-3025" [active ingredient: ammonium polyoxyethylene-1-(allyloxymethyl) alkyl ether sulfate (type of the oxyalkylene group: an oxyethylene group, the average number of moles added: 30), active ingredient concentration: 25 mass%] manufactured by ADEKA Corporation.

Examples of commercially available products of the nonionic reactive surfactant include "ADEKAREASOAP ER-10" [active ingredient: polyoxyethylene-1-(allyloxymethyl) alkyl ether (type of the oxyalkylene group: an oxyethylene group, the average number of moles added: 10), active ingredient concentration: 100 mass%], "ADEKAREASOAP ER-30" [active ingredient: polyoxyethylene-1-(allyloxymethyl) alkyl ether (type of the oxyalkylene group: an oxyethylene group, the average number of moles added: 30), active ingredient concentration: 65 mass%], and "ADEKA REASOAP ER-40" [active ingredient: polyoxyethylene-1-(allyloxymethyl) alkyl ether (type of the oxyalkylene group: an oxyethylene group, the average number of moles added: 40), active ingredient concentration: 60 mass%] manufactured by ADEKA Corporation.

Both "AQUALON" and "ADEKAREASOAP" above are registered trademarks.

The specific (meth)acrylic resin particles may contain only one kind of the constituent unit (D), or may contain two or more kinds of the constituent unit (D).

The content amount of the constituent unit (D) in the specific (meth)acrylic resin particles is from 0.1 parts by mass to 1.0 part by mass with respect to 100 parts by mass of all the constituent units excluding the constituent unit (D) of the specific (meth)acrylic resin particles.

When the content amount of the constituent unit (D) in the specific (meth)acrylic resin particles is 0.1 parts by mass or more with respect to 100 parts by mass of all the constituent units excluding the constituent unit (D) of the specific (meth)acrylic resin particles, the specific (meth)acrylic resin particles can be produced by emulsion polymerization. The content amount of the constituent unit (D) in the specific (meth)acrylic resin particles is preferably 0.2 parts by mass or more, more preferably 0.3 parts by mass or more, and still more preferably 0.5 parts by mass or more with respect to 100 parts by mass of all the constituent units excluding the constituent unit (D) of the specific (meth)acrylic resin particles.

When a pressure-sensitive adhesive layer is formed from the pressure-sensitive adhesive composition of the disclosure, the constituent unit (D) may be present on the surface of the pressure-sensitive adhesive layer. Thus, for example, when water adheres to the pressure-sensitive adhesive layer, the reactive surfactant may be dissolved in water, and consequently a phenomenon in which water permeates into the pressure-sensitive adhesive layer may occur. In this respect, when the content amount of the constituent unit (D) in the specific (meth)acrylic resin particles is 1.0 part by mass or less with respect to 100 parts by mass of all the constituent units excluding the constituent unit (D) of the specific (meth)acrylic resin particles, permeation of water into the pressure-sensitive adhesive layer due to dissolution of the reactive surfactant is suppressed, and therefore excellent water resistance of the pressure-sensitive adhesive layer is maintained. From such a point of view, the content amount of the constituent unit (D) in the specific (meth)acrylic resin particle is 1.0 part by mass or less, preferably 0.9 parts by mass or less, more preferably 0.8 parts by mass or less, and still more preferably 0.6 parts by mass or less with respect to 100 parts by mass of all the constituent units excluding the constituent unit (D) of the specific (meth)acrylic resin particles.

<Constituent Unit Derived from (Meth)acrylamide Having Hydroxy Group>

The specific (meth)acrylic resin particles preferably are free of a constituent unit derived from a (meth)acrylamide having a hydroxy group or have a content ratio of a constituent unit derived from a (meth)acrylamide having a hydroxy group in the range of more than 0 mass% and less than 0.1 mass% with respect to all the constituent units excluding the constituent unit (D) of the specific (meth)acrylic resin particles, more preferably are free of a constituent unit derived from a (meth)acrylamide having a hydroxy group or have a content ratio of a constituent unit derived from a (meth)acrylamide having a hydroxy group in the range of more than 0 mass% and 0.05 mass% or less with respect to all the constituent units excluding the constituent unit (D) of the specific (meth)acrylic resin particles, and still more preferably are free of a constituent unit derived from a (meth)acrylamide having a hydroxy group. In the disclosure, the "constituent unit derived from a (meth)acrylamide having a hydroxy group" means a constituent unit formed by addition polymerization of a (meth)acrylamide having a hydroxy group.

The (meth)acrylamide having a hydroxy group has self-crosslinkability, and can be self-crosslinked by dehydration condensation. However, crosslinking between molecules of a (meth)acrylamide having a hydroxy group tends to make the distance between crosslinks shorter, and is likely to produce a hard, brittle pressure-sensitive adhesive layer. Thus, when a (meth)acrylamide having a hydroxy group is contained, there is a tendency of being weakened against the load in a direction perpendicular to the attachment surface. In this respect, when the specific (meth)acrylic resin particles are free of a constituent unit derived from a (meth)acrylamide having a hydroxy group or have a content ratio of a constituent unit derived from a (meth)acrylamide having a hydroxy group in the range of more than 0 mass% and less than 0.1 mass% with respect to all the constituent units excluding the constituent unit (D) of the specific (meth)acrylic resin particles, formation of a hard, brittle pressure-sensitive adhesive layer due to self-crosslinking of a (meth)acrylamide having a hydroxy group is suppressed. Thus, an impairment in load bearing capacity in the perpendicular direction of the formed pressure-sensitive adhesive layer is suppressed.

The type of the (meth)acrylamide having a hydroxy group is not particularly limited.

Specific examples of the (meth)acrylamide having a hydroxy group include N-hydroxymethylacrylamide, N-hydroxymethylmethacrylamide, N-(2-hydroxyethyl)acrylamide, N-(2-hydroxyethyl)methacrylamide, 2,3-dihydroxypropylacrylamide, and 2,3-dihydroxypropylmethacrylamide.

<Other Constituent Unit>

The specific (meth)acrylic resin particles may contain a constituent unit (what is called other constituent unit) other than the above-described constituent units as necessary to the extent that the effect of the pressure-sensitive adhesive composition of the disclosure is not impaired.

Examples of monomers to form other constituent unit include a (meth)acrylate having an aromatic ring typified by benzyl (meth)acrylate or phenoxyethyl (meth)acrylate, an alkoxyalkyl (meth)acrylate typified by methoxyethyl (meth)acrylate or ethoxyethyl (meth)acrylate, an aromatic monovinyl typified by styrene, α-methylstyrene, t-butylstyrene, p-chlorostyrene, chloromethylstyrene, or vinyltoluene, and a vinyl ester typified by vinyl formate, vinyl acetate, vinyl propionate, or vinyl versatate. Further, examples of monomers to form other constituent unit include various derivatives of these monomers.

In the case in which the specific (meth)acrylic resin particles contain other constituent unit, the specific (meth)acrylic resin particles may contain only one kind of other constituent unit, or may contain two or more kinds of other constituent unit.

In the case in which the specific (meth)acrylic resin particles contain other constituent unit, the content ratio of the other constituent unit can be set according to the purpose as appropriate to the extent that the effect of the pressure-sensitive adhesive composition of the disclosure is not impaired.

«Shape of Specific (Meth)acrylic Resin Particle»

The shape of the specific (meth)acrylic resin particle is not particularly limited, but is preferably a spherical shape. The "spherical shape" referred to in the disclosure includes not only a perfect spherical shape but also a substantially spherical shape.

<<Average Particle Diameter of Specific (Meth)acrylic Resin Particles>>

The average particle diameter of the specific (meth)acrylic resin particles is from 5 nm to 160 nm.

From the viewpoint of production suitability of the specific (meth)acrylic resin particles, the average particle diameter of the specific (meth)acrylic resin particles is 5 nm or more, preferably 10 nm or more, more preferably 20 nm or more, and still more preferably 30 nm or more.

When the average particle diameter of the specific (meth)acrylic resin particles is 160 nm or less, there is a tendency that a pressure-sensitive adhesive layer excellent in water resistance can be formed. The reason is presumably as follows. Since the average particle diameter of the specific (meth)acrylic resin particles is a relatively small particle diameter, specifically 160 nm or less, the specific (meth)acrylic resin particles tend to be densely arranged during the step of drying the coating film of the pressure-sensitive adhesive composition. It is presumed that, by the specific (meth)acrylic resin particles being densely arranged, the smoothness of the surface of the formed pressure-sensitive adhesive layer is enhanced and water is less likely to permeate into the pressure-sensitive adhesive layer. From such a point of view, the average particle diameter of the specific (meth)acrylic resin particles is 160 nm or less, preferably 150 nm or less, more preferably 130 nm or less, and still more preferably 110 nm or less.

In an aspect, the average particle diameter of the specific (meth)acrylic resin particles may be from 30 nm to 160 nm.

The average particle diameter of the specific (meth)acrylic resin particles can be adjusted by, for example, changing the concentration of the reactive surfactant in the polymerization reaction solution when producing the specific (meth)acrylic resin particles. For example, the particle diameter of the specific (meth)acrylic resin particle is smaller when the concentration of the reactive surfactant in the polymerization reaction solution is higher in the initial stage of the production process, and is larger when the concentration of the reactive surfactant in the polymerization reaction solution is lower in the initial stage of the production process. The "initial stage of the production process" herein refers to, for example, in the case in which the method of [3] is employed as an emulsion polymerization method for producing the specific (meth)acrylic resin particles described later, the time point at which an emulsion of a mixture containing monomer components and a reactive surfactant is prepared.

The particle diameter of the specific (meth)acrylic resin particle can be adjusted also by, for example, changing dispersion conditions (for example, the stirring speed) of the reaction field so that the dispersion state of the components contained in the polymerization reaction solution is different.

The average particle diameter of the specific (meth)acrylic resin particles means a volume average particle diameter.

The average particle diameter of the specific (meth)acrylic resin particles is a value measured by the following method using a laser diffraction particle diameter distribution measurement apparatus.

The specific (meth)acrylic resin particles are diluted with distilled water, stirring and mixing are sufficiently performed, then collecting is performed into a glass cell of 10 mm × 75 mm × 85 mm by using a Pasteur pipette, and the glass cell is set in a laser diffraction particle diameter distribution measurement apparatus. The concentration of the diluted liquid of the specific (meth)acrylic resin particles is adjusted so that the laser light transmittance is 85%, and then the particle diameter distribution is measured under the condition of a measurement temperature of 25°C. The measurement result is subjected to computer processing, and thereby the volume average particle diameter of the specific (meth)acrylic resin particles is determined. Specifically, the particle diameter at an integrated value of 50% (on a volume basis) in the obtained particle diameter distribution is taken as the volume average particle diameter.

As the laser diffraction particle diameter distribution measurement apparatus, for example, "Laser Scattering Particle Size Distribution Analyzer LA-960" manufactured by HORIBA, Ltd. can be suitably used. However, the laser diffraction particle diameter distribution measurement apparatus is not limited thereto.

«Glass Transition Temperature of Specific (Meth)acrylic Resin Particles»

The glass transition temperature (hereinafter, also referred to as "Tg") of the specific (meth)acrylic resin particles is not particularly limited, but is, for example, preferably from - 70°C to 30°C, more preferably from -65°C to 25°C, and still more preferably from -60°C to 20°C.

When the glass transition temperature of the specific (meth)acrylic resin particles is - 70°C or higher, the formed pressure-sensitive adhesive layer tends to exhibit moderate wettability to the adherend.

When the glass transition temperature of the specific (meth)acrylic resin particles is 30°C or lower, there is a tendency that zipping at the time of peeling from the adherend is less likely to occur.

The glass transition temperature of the specific (meth)acrylic resin particles is a value measured by the following method using a differential scanning calorimeter (DSC, Differential scanning calorimetry).

An aqueous dispersion of the specific (meth)acrylic resin particles is applied onto release paper by using a 4 mil (101.6 μm) applicator. Next, the applied aqueous dispersion of the specific (meth)acrylic resin particles is dried (drying temperature: 105°C, drying time: 10 minutes) to obtain a dried product of the specific (meth)acrylic resin particles. 10 mg of the dried product is filled into an aluminum sample pan [for example, Tzero Pan (trade name) manufactured by TA Instruments Inc.], sealing is performed with an aluminum lid [for example, Tzero Hermetic Lid (trade name) manufactured by TA Instruments Inc.], and then the glass transition temperature is measured using a differential scanning calorimeter under the following measurement conditions. In the present measurement, the temperature at the point of intersection of, on the obtained DSC curve, a straight line obtained by extending the baseline on the low temperature side to the high temperature side and a tangent line drawn at, on the curve of the stepwise change portion of glass transition, a point at which the gradient is at the maximum is taken as the glass transition temperature.

As the differential scanning calorimeter, for example, a differential scanning calorimeter (trade name: Discovery DSC 2500) manufactured by TA Instruments Japan Inc. can be used. However, the differential scanning calorimeter is not limited thereto.

-Measurement Conditions-

Atmosphere conditions: in the atmosphere
Measurement temperature range: from -90°C to 100°C
Temperature increase rate: 10°C/min
Standard substance: an empty sample pan

«Gel Fraction of Specific (Meth)acrylic Resin Particles»

The gel fraction of the specific (meth)acrylic resin particles is not particularly limited, but is, for example, preferably from 10 mass% to 70 mass%, more preferably from 12 mass% to 68 mass%, and still more preferably from 15 mass% to 65 mass%.

The gel fraction of the specific (meth)acrylic resin particles is the ratio of solvent-insoluble components measured using ethyl acetate as an extraction solvent. Specifically, the gel fraction of the specific (meth)acrylic resin particles is determined according to the procedure of [1] to [17] shown below.

[1] Ammonia water is added to an aqueous dispersion of the specific (meth)acrylic resin particles to adjust the pH to 8.5 (liquid temperature: 25°C), and then application is performed onto a release film made of polyethylene terephthalate (PET) having a thickness of 100 μm to form a coating film. Next, the formed coating film is dried at 105°C for 2 minutes to obtain a release film-attached resin film.

[2] The obtained release film-attached resin film is cut out into a size of 75 mm × 75 mm. The weight of the resin film included in the cut-out release film-attached resin film is about 0.2 g.

[3] A stainless steel wire net of 250 mesh (wire diameter: 0.03 mm, mesh opening size: 72 μm) is prepared, and the wire net is cut out into a size of 100 mm × 100 mm. The unraveling of the end portion of the wire net causes a measurement error, and is thus removed in advance.

[4] The cut-out wire net is degreased using ethyl acetate, and is then dried. The wire net after drying is stored in a desiccator.

[5] The mass of the wire net is accurately measured. The measured mass of the wire net is denoted by A (unit: g).

[6] The release film-attached resin film of [2] above cut out into a size of 75 mm × 75 mm is attached to the center of the wire net, and then the release film is peeled off from the resin film to obtain a resin film-attached wire net. The attachment of the resin film to the wire net is performed such that the resin film is placed in the plane after the wire net is folded by the steps of [7] to [9] described later.

[7] The resin film-attached wire net is folded in half with the resin film inside. Specifically, the resin film-attached wire net is folded such that the side on the far side of the resin film-attached wire net is superimposed on the side on the near side.

[8] 1/3 on the near side (the side where the two sides are superimposed) of the resin film-attached wire net folded in half is folded on the far side, and then 1/3 on the far side is folded on the near side. At this time point, the resin film-attached wire net is folded in a size of 1/6 in the depth direction from the original size (100 mm), and is not folded in the breadth direction.

[9] 1/3 on the left side in the longitudinal direction of the resin film-attached wire net folded in [8] above is folded on the right side, and then 1/3 on the right side is folded on the left side. This is referred to as sample piece X1. Sample piece X1 has been folded in a size of 1/6 in the depth direction and in a size of 1/3 in the breadth direction from the original size (100 mm).

[10] The mass of sample piece X1 is accurately measured using a precision balance. The mass is denoted by B (unit: g).

[11] The fold of sample piece X1 is stapled so as not to be opened. This is referred to as sample piece X2. Two sample pieces X2 are produced per sample.

[12] The mass of sample piece X2 is accurately measured using a precision balance. The mass is denoted by C (unit: g).

[13] Sample piece X2 is put into a glass bottle in which 80 g of ethyl acetate is put, and the glass bottle is capped.

[14] The glass bottle in which sample piece X2 is put is allowed to stand in an environment of an atmosphere temperature of 23°C and 50%RH for 3 days.

[15] Sample piece X2 is taken out of the glass bottle, and is washed with a small amount of ethyl acetate.

[16] Sample piece X2 is dried under the conditions of a drying temperature of 100°C and a drying time of 24 hours. The mass of sample piece X2 after drying is accurately measured using a precision balance. The mass is denoted by D (unit: g).

[17] The gel fraction is calculated by the following formula, and the obtained values are arithmetically averaged.

$$\text{Gel fraction [mass\%]} = (D - (A + (C - B)))/(B - A) \times 100$$

<<Content Ratio of Specific (Meth)acrylic Resin Particles>>

The content ratio of the specific (meth)acrylic resin particles in the pressure-sensitive adhesive composition of the disclosure is not particularly limited, but is, for example, preferably from 80 mass% to 100 mass%, more preferably from 85 mass% to 100 mass%, and still more preferably from 90 mass% to 100 mass% with respect to the total solid content in the pressure-sensitive adhesive composition.

In the disclosure, the "total solid content in the pressure-sensitive adhesive composition" means the mass of residues obtained by removing the solvent from the pressure-sensitive adhesive composition. In the disclosure, the "solvent" means water and an organic solvent.

[Crosslinking Agent]

The pressure-sensitive adhesive composition of the disclosure preferably further contains a crosslinking agent.

The carboxy group derived from the constituent unit (C) of the specific (meth)acrylic resin particles contributes to crosslinking reaction with the crosslinking agent. Thus, when the pressure-sensitive adhesive composition of the disclosure contains a crosslinking agent, the cohesive force of the formed pressure-sensitive adhesive layer is enhanced, and the load bearing capacity in the perpendicular direction can be improved more.

The type of the crosslinking agent is not particularly limited.

Examples of the crosslinking agent include a carbodiimide-based crosslinking agent, an oxazoline-based crosslinking agent, a hydrazide-based crosslinking agent, an epoxy-based crosslinking agent, and an isocyanate-based crosslinking agent.

In the disclosure, the "carbodiimide-based crosslinking agent" refers to a compound having, in one molecule, two or more carbodiimide groups or two or more cyanamide groups, which each have a tautomeric relationship with a carbodiimide group, the "oxazoline-based crosslinking agent" refers to a compound having two or more oxazoline groups in one molecule, the "hydrazide-based crosslinking agent" refers to a compound having two or more hydrazide groups in one molecule, the "epoxy-based crosslinking agent" refers to a compound having two or more epoxy groups in one molecule, and the "isocyanate-based crosslinking agent" refers to a compound having two or more isocyanate groups in one molecule.

The crosslinking agent is preferably at least one selected from a carbodiimide-based crosslinking agent and an oxazoline-based crosslinking agent, and more preferably a carbodiimide-based crosslinking agent.

Specific examples of the carbodiimide-based crosslinking agent include aromatic polycarbodiimides such as poly(4,4'-diphenylmethanecarbodiimide), poly(p-phenylenecarbodiimide), poly(m-phenylenecarbodiimide), poly(diisopropylphenylcarbodiimide), and poly(triisopropylphenylcarbodiimide), alicyclic polycarbodiimides such as poly(dicyclohexylmethanecarbodiimide), and aliphatic polycarbodiimides such as poly(diisopropylcarbodiimide).

Examples of commercially available products of the carbodiimide-based crosslinking agent include "CARBODILITE (registered trademark) V-02", "CARBODILITE (registered trademark) V-02-L2", "CARBODILITE (registered trademark) SV-02", "CARBODILITE (registered trademark) V-04", "CARBODILITE (registered trademark) V-10", "CARBODILITE (registered trademark) E-02", and "CARBODILITE (registered trademark) E-05" manufactured by Nisshinbo Chemical Inc.

The oxazoline group contained in the oxazoline-based crosslinking agent may be any of a 2-oxazoline group, a 3-oxazoline group, and a 4-oxazoline group.

Specific examples of the oxazoline-based crosslinking agent include 2-vinyl-2-oxazoline, 5-methyl-2-vinyl-2-oxazoline, 4,4-dimethyl-2-vinyl-2-oxazoline, 2-isopropenyl-2-oxazoline, 4,4-dimethyl-2-isopropenyl-2-oxazoline, 4-acryloyl-oxymethyl-2,4-dimethyl-2-oxazoline, 4-methacryloyloxymethyl-2,4-dimethyl-2-oxazoline, 4-methacryloyloxymethyl-2-phenyl-4-methyl-2-oxazoline, 2-(4-vinylphenyl)-4,4-dimethyl-2-oxazoline, 4-ethyl-4-hydroxymethyl-2-isopropenyl-2-oxazoline, and 4-ethyl-4-carboethoxymethyl-2-isopropenyl-2-oxazoline, and polymer compositions containing a constituent unit derived from these compounds.

Examples of commercially available products of the oxazoline-based crosslinking agent include "EPOCROS (registered trademark) WS-300", "EPOCROS (registered trademark) WS-500", and "EPOCROS (registered trademark) WS-700" manufactured by Nippon Shokubai Co., Ltd.

In the case in which the pressure-sensitive adhesive composition of the disclosure contains a crosslinking agent, the pressure-sensitive adhesive composition may contain only one crosslinking agent, or may contain two or more crosslinking agents.

In the case in which the pressure-sensitive adhesive composition of the disclosure contains a crosslinking agent, the content amount of the crosslinking agent is not particularly limited, but is, for example, preferably 0.1 parts by mass or more, more preferably 0.5 parts by mass or more, still more preferably 1 part by mass or more, and particularly preferably 3 parts by mass or more with respect to 100 parts by mass of the specific (meth)acrylic resin particles. When the content amount of the crosslinking agent in the pressure-sensitive adhesive composition of the disclosure is 0.1 parts by mass or more with respect to 100 parts by mass of the acrylic resin, the cohesive force of the formed pressure-sensitive adhesive layer is enhanced, and the load bearing capacity in the perpendicular direction can be improved more.

The content amount of the crosslinking agent is preferably 10 parts by mass or less, more preferably 8 parts by mass or less, and still more preferably 5 parts by mass or less with respect to 100 parts by mass of the specific (meth)acrylic resin particles. When the content amount of the crosslinking agent in the pressure-sensitive adhesive composition of the disclosure is 10 parts by mass or less with respect to 100 parts by mass of the acrylic resin, the formed pressure-sensitive adhesive layer tends to have higher pressure-sensitive adhesive force.

In an aspect, the content amount of the crosslinking agent may be from 1 part by mass to 5 parts by mass or from 3 parts by mass to 5 parts by mass with respect to 100 parts by mass of the specific (meth)acrylic resin particles.

[Water]

The pressure-sensitive adhesive composition of the disclosure contains water.

The water is not particularly limited, but is, for example, preferably distilled water, ion-exchanged water, pure water, or the like from the viewpoint of small amounts of impurities.

The content ratio of water in the pressure-sensitive adhesive composition of the disclosure is not particularly limited, but is, for example, preferably from 40 mass% to 80 mass% and more preferably from 40 mass% to 70 mass% with respect to the total mass of the pressure-sensitive adhesive composition.

[Aqueous Medium Other Than Water]

The pressure-sensitive adhesive composition of the disclosure may contain an aqueous medium other than water as necessary to the extent that the effect of the pressure-sensitive adhesive composition is not impaired.

Examples of the aqueous medium other than water include water-miscible organic solvents.

Examples of the water-miscible organic solvent include organic solvents such as: monohydric alcohol compounds such as methanol, ethanol, propanol, and isopropanol; polyhydric alcohol compounds such as glycerin, ethylene glycol, diethylene glycol, and propylene glycol; and glycol derivatives such as ethylene glycol monomethyl ether, ethylene glycol monoethyl ether, diethylene glycol monomethyl ether, diethylene glycol monobutyl ether, propylene glycol monomethyl ether, propylene glycol monobutyl ether, and dipropylene glycol monomethyl ether.

In the case in which the pressure-sensitive adhesive composition of the disclosure contains an aqueous medium other than water, the pressure-sensitive adhesive composition may contain only one aqueous medium other than water, or may contain two or more aqueous media other than water.

In the case in which the pressure-sensitive adhesive composition of the disclosure contains an aqueous medium other than water, the content ratio of the aqueous medium other than water can be set according to the purpose as appropriate to the extent that the effect of the pressure-sensitive adhesive composition of the disclosure is not impaired.

[Water-Immiscible Organic Solvent]

The pressure-sensitive adhesive composition of the disclosure preferably is free of a water-immiscible organic solvent or has a content ratio of the water-immiscible organic solvent in the range of more than 0 mass% and 5 mass% or less with respect to the total mass of the pressure-sensitive adhesive composition, more preferably is free of a water-immiscible organic solvent or has a content ratio of the water-immiscible organic solvent in the range of more than 0 mass% and 3 mass% or less with respect to the total mass of the pressure-sensitive adhesive composition, still more preferably is free of a water-immiscible organic solvent or has a content ratio of the water-immiscible organic solvent in the range of more than 0 mass% and 1 mass% or less with respect to the total mass of the pressure-sensitive adhesive composition, and particularly preferably is free of a water-immiscible organic solvent or has a content ratio of the water-immiscible organic solvent in the range of more than 0 mass% and 0.5 mass% or less with respect to the total mass of the pressure-sensitive adhesive composition.

Examples of the water-immiscible organic solvent include organic solvents such as: aromatic hydrocarbon compounds such as benzene, toluene, and xylene; ether compounds such as diethyl ether and diisopropyl ether; aliphatic hydrocarbon compounds such as hexane and heptane; halogenated hydrocarbon compounds such as dichloroethane and chloroform; ester compounds such as ethyl acetate and butyl acetate; alcohol compounds such as octanol; and ketone compounds such as methyl isobutyl ketone.

[Other Components]

The pressure-sensitive adhesive composition of the disclosure may contain components (what is called other components) other than the above-described components as necessary to the extent that the effect of the pressure-sensitive adhesive composition is not impaired.

Examples of other components include resin particles other than the specific (meth)acrylic resin particles, and various additives such as an antioxidant, an antistatic agent, a conductivity imparting agent, a pH adjuster, an antifoaming agent, a wetting agent, a thickener, a filler, a pigment, and a plasticizer.

In the case in which the pressure-sensitive adhesive composition of the disclosure contains other components, the content amounts of the other components can be set according to the purpose as appropriate to the extent that the effect of the pressure-sensitive adhesive composition of the disclosure is not impaired.

«pH of Pressure-sensitive Adhesive Composition»

The pH of the pressure-sensitive adhesive composition of the disclosure is, for example, preferably from 2 to 10 from the viewpoint of dispersibility of the specific (meth)acrylic resin particles in the pressure-sensitive adhesive composition.

The method for measuring the pH of the pressure-sensitive adhesive composition of the disclosure is not particularly limited.

As the pH of the pressure-sensitive adhesive composition of the disclosure, a value measured using a pH meter under the condition of a liquid temperature of 25°C by a method conforming to JIS Z 8802: 2011 is used. As the measurement apparatus, for example, a pH meter (trade name: F-51) manufactured by HORIBA, Ltd. can be used. However, the measurement apparatus is not limited thereto.

[Method for Producing Pressure-sensitive Adhesive Composition]

The method for producing the pressure-sensitive adhesive composition of the disclosure is not particularly limited as long as the pressure-sensitive adhesive composition of the disclosure described above can be produced. The pressure-sensitive adhesive composition of the disclosure is preferably produced by, for example, a method including a step of producing the specific (meth)acrylic resin particles by an emulsion polymerization method.

Examples of the emulsion polymerization method for producing the specific (meth)acrylic resin particles include the methods of [1] to [3] shown below. Hereinafter, monomers [at least an alkyl (meth)acrylate monomer, (meth)acrylonitrile, and a (meth)acrylic monomer having a carboxy group] to form constituent units of the specific (meth)acrylic resin particles are also referred to as "monomer components".

[1] A method in which monomer components, a reactive surfactant, and water are introduced into a reactor equipped with a thermometer, a stirrer, a material introduction tube, a reflux condenser, a nitrogen introduction tube, etc., the temperature is increased while stirring is performed in a nitrogen stream, then a polymerization initiator, a reducing agent, etc. are added as appropriate, and emulsion polymerization reaction is advanced (what is called a batch preparation method).

[2] A method in which at least a reactive surfactant and water are introduced into a reactor equipped with a thermometer, a stirrer, a material introduction tube, a reflux condenser, a nitrogen introduction tube, etc., the temperature is increased while stirring is performed in a nitrogen stream, then monomer components are dropped, a polymerization initiator, a reducing agent, etc. are added as appropriate, and emulsion polymerization reaction is advanced (what is called a monomer dropping method).

[3] A method in which: water and a reactive surfactant are introduced into a reactor equipped with a thermometer, a stirrer, a material introduction tube, a reflux condenser, a nitrogen introduction tube, etc., the temperature is increased while stirring is performed in a nitrogen stream, and then a polymerization initiator, a reducing agent, etc.

are added as appropriate; in another container, monomer components are emulsified in advance using at least a reactive surfactant and water, and an emulsion of a mixture containing monomer components and a reactive surfactant is prepared; and next, the emulsion of a mixture containing monomer components and a reactive surfactant is dropped into the reactor, a polymerization initiator, a reducing agent, etc. are added as appropriate, and emulsion polymerization reaction is advanced (what is called an emulsion monomer dropping method).

Among these, as the emulsion polymerization method for producing the specific (meth)acrylic resin particles, for example, the emulsion monomer dropping method of [3] above is preferable from the viewpoint of industrial productivity.

The method for producing the pressure-sensitive adhesive composition of the disclosure preferably includes a step of producing (meth)acrylic resin particles by performing emulsion polymerization of at least an alkyl (meth)acrylate monomer, (meth)acrylonitrile, a (meth)acrylic monomer having a carboxy group, and a reactive surfactant using a chain transfer agent. Polymerizability can be improved by performing emulsion polymerization of monomer components and a reactive surfactant using a chain transfer agent.

For example, in the case in which the emulsion monomer dropping method of [3] above is chosen as the emulsion polymerization method for producing the specific (meth)acrylic resin particles, the following operation is performed.

Water and a reactive surfactant are introduced into a reactor equipped with a thermometer, a stirrer, a material introduction tube, a reflux condenser, a nitrogen introduction tube, etc., the temperature is increased while stirring is performed in a nitrogen stream, and then a polymerization initiator, a reducing agent, etc. are added as appropriate. In another container, monomer components are emulsified in advance using at least a reactive surfactant, a chain transfer agent, and water, and an emulsion of a mixture containing monomer components and a reactive surfactant is prepared. Next, the emulsion of a mixture containing monomer components and a reactive surfactant is dropped into the reactor, a polymerization initiator, a reducing agent, etc. are added as appropriate, and emulsion polymerization reaction is advanced.

The specific (meth)acrylic resin particles obtained by the emulsion polymerization method are obtained in a state of a dispersion in which the specific (meth)acrylic resin particles are dispersed in a medium containing at least water.

Details of the alkyl (meth)acrylate monomer are as described above.

The amount of the alkyl (meth)acrylate monomer used is not particularly limited, but is, for example, preferably from 50 parts by mass to 89.8 parts by mass, more preferably from 55 parts by mass to 89.8 parts by mass, still more preferably from 60 parts by mass to 89.8 parts by mass, and particularly preferably from 65 parts by mass to 89.8 parts by mass with respect to 100 parts by mass of the total amount of the monomers.

Details of the (meth)acrylonitrile are as described above.

The amount of (meth)acrylonitrile used is from 10 parts by mass to 25 parts by mass with respect to 100 parts by mass of the total amount of the monomers. The lower limit of the amount of (meth)acrylonitrile used is preferably 15 parts by mass or more and more preferably 20 parts by mass or more with respect to 100 parts by mass of the total amount of the monomers.

Details of the (meth)acrylic monomer having a carboxy group are as described above.

The amount of the (meth)acrylic monomer having a carboxy group used is from 0.2 parts by mass to 6.0 parts by mass, preferably from 0.5 parts by mass to 6.0 parts by mass, more preferably from 1.0 part by mass to 6.0 parts by mass, and still more preferably from 2.0 parts by mass to 6.0 parts by mass with respect to 100 parts by mass of the total amount of the monomers.

Details of the reactive surfactant are as described above.

The amount of the reactive surfactant used is from 0.1 parts by mass to 1.0 part by mass with respect to 100 parts by mass of the total amount of the monomers. The lower limit of the amount of the reactive surfactant used is preferably 0.2 parts by mass or more, more preferably 0.3 parts by mass or more, and still more preferably 0.5 parts by mass or more with respect to 100 parts by mass of the total amount of the monomers. The upper limit of the amount of the reactive surfactant used is preferably 0.9 parts by mass or less, more preferably 0.8 parts by mass or less, and still more preferably 0.6 parts by mass or less with respect to 100 parts by mass of the total amount of the monomers.

The chain transfer agent is not particularly limited as long as it can be used for usual emulsion polymerization.

Examples of the chain transfer agent include cyanoacetic acid, a C1-C8 alkyl ester compound of cyanoacetic acid, bromoacetic acid, a C1-C8 alkyl ester compound of bromoacetic acid, aromatic compounds typified by $\alpha$-methylstyrene, anthracene, phenanthrene, fluorene, and 9-phenylfluorene, aromatic nitro compounds typified by p-nitroaniline, nitrobenzene, dinitrobenzene, p-nitrobenzoic acid, p-nitrophenol, and p-nitrotoluene, benzoquinone and benzoquinone derivatives typified by 2,3,5,6-tetramethyl-p-benzoquinone, borane derivatives typified by tributylborane, halogenated hydrocarbon compounds typified by carbon tetrabromide, carbon tetrachloride, 1,1,2,2-tetrabromoethane, tribromoethylene, trichloroethylene, bromotrichloromethane, tribromomethane, and 3-chloro-1-propene, aldehyde compounds typified by chloral and furaldehyde, a C1-C18 alkyl mercaptan compound, aromatic mercaptan compounds typified by thiophenol and toluene mercaptan, mercaptoacetic acid, a C1-C10 alkyl ester compound of mercaptoacetic acid, a C1-C12 hydroxyalkyl mercaptan compound, and terpene compounds typified by pinene and terpinolene.

In the case in which a chain transfer agent is used, only one chain transfer agent may be used, or two or more chain transfer agents may be used.

The chain transfer agent is used in an amount usually used.

The amount of the chain transfer agent used is, for example, preferably from 0.01 parts by mass to 0.05 parts by mass with respect to 100 parts by mass of the total amount of the monomers.

The polymerization initiator is not particularly limited as long as it can be used for usual emulsion polymerization.

Examples of the polymerization initiator include a persulfate, an organic peroxide, and an azo compound.

Specific examples of the persulfate include ammonium persulfate, sodium persulfate, and potassium persulfate.

Specific examples of the organic peroxide include t-butyl hydroperoxide, benzoyl peroxide, lauroyl peroxide, caproyl peroxide, di-i-propyl peroxydicarbonate, di-2-ethylhexyl peroxydicarbonate, and t-butyl peroxypivalate.

Specific examples of the azo compound include 2,2'-azobisisobutyronitrile, 2,2'-azobis(2,4-dimethylvaleronitrile), 2,2'-azobis(4-methoxy-2,4-dimethylvaleronitrile), 1,1'-azobis(cyclohexane-1-carbonitrile), and dimethyl 2,2'-azobis(isobutyrate).

In the case in which a polymerization initiator is used, only one polymerization initiator may be used, or two or more polymerization initiators may be used.

The polymerization initiator is used in an amount usually used.

The amount of the polymerization initiator used is, for example, preferably from 0.2 parts by mass to 5.0 parts by mass with respect to 100 parts by mass of the total amount of the monomers.

The reducing agent is not particularly limited as long as it can be used for usual emulsion polymerization.

Examples of the reducing agent include sodium metabisulfite, sodium sulfite, sodium hydrogen sulfite, sodium pyrosulfite (also referred to as "sodium disulfite"), sodium hydroxymethanesulfinate, sodium pyrophosphate, thioglycolic acid, sodium thiosulfate, thiourea dioxide, L-ascorbic acid, tartaric acid, citric acid, and glucose.

In the case in which a reducing agent is used, only one reducing agent may be used, or two or more reducing agents may be used.

The reducing agent is used in an amount usually used.

The amount of the reducing agent used is, for example, preferably from 0.2 parts by mass to 5.0 parts by mass with respect to 100 parts by mass of the total amount of the monomers.

The polymerization temperature is, for example, preferably from 50°C to 90°C.

The polymerization time is, for example, preferably from 1 hour to 5 hours.

The method for producing the pressure-sensitive adhesive composition of the disclosure preferably includes a step of adjusting the pH of the dispersion containing the specific (meth)acrylic resin particles obtained in the above.

The pH of the dispersion containing the specific (meth)acrylic resin particles is preferably adjusted to from 2 to 10 from the viewpoint of dispersibility of the specific (meth)acrylic resin particles in the pressure-sensitive adhesive composition.

The method of adjusting the pH of the dispersion containing the specific (meth)acrylic resin particles is not particularly limited, and examples include a method using a pH adjuster.

As the pH adjuster, for example, ammonia water can be suitably used.

As the pH of the dispersion containing the specific (meth)acrylic resin particles, a value measured using a pH meter under the condition of a liquid temperature of 25°C by a method conforming to JIS Z 8802: 2011 is used. As the measurement apparatus, for example, a pH meter (trade name: F-51) manufactured by HORIBA, Ltd. can be used. However, the measurement apparatus is not limited thereto.

Although emulsion polymerization is given in the above as an example of the method of producing the specific (meth)acrylic resin particles, the method for producing the specific (meth)acrylic resin particles in the disclosure is not limited to the emulsion polymerization, and also a seed polymerization method can be used, for example.

The method for producing the pressure-sensitive adhesive composition of the disclosure may include steps (what is called other steps) other than the steps described above as necessary.

Examples of other steps include a step of mixing together a dispersion containing the specific (meth)acrylic resin particles, and a crosslinking agent and other additives, which are optional components of the pressure-sensitive adhesive composition of the disclosure.

[Pressure-sensitive Adhesive Layer]

The pressure-sensitive adhesive layer of the disclosure is formed from the pressure-sensitive adhesive composition of the disclosure described above, and contains a (meth)acrylic resin containing a constituent unit (A) derived from an alkyl (meth)acrylate monomer, a constituent unit (B) derived from (meth)acrylonitrile, a constituent unit (C) derived from a (meth)acrylic monomer having a carboxy group, and a constituent unit (D) derived from a reactive surfactant, in which the content ratio of the constituent unit (B) is from 10 mass% to 25 mass% with respect to all the constituent units excluding the constituent unit (D), the content ratio of the constituent unit (C) is from 0.2 mass% to 6.0 mass% with respect to all the constituent units excluding the constituent unit (D), and the content amount of the constituent unit (D) is from 0.1 parts by mass to 1.0 part by mass with respect to 100 parts by mass of all the constituent units excluding the constituent unit (D).

Hereinafter, the "(meth)acrylic resin containing a constituent unit (A) derived from an alkyl (meth)acrylate monomer, a constituent unit (B) derived from (meth)acrylonitrile, a constituent unit (C) derived from a (meth)acrylic monomer having a carboxy group, and a constituent unit (D) derived from a reactive surfactant, in which the content ratio of the constituent unit (B) is from 10 mass% to 25 mass% with respect to all the constituent units excluding the constituent unit (D), the content ratio of the constituent unit (C) is from 0.2 mass% to 6.0 mass% with respect to all the constituent units excluding the constituent unit (D), and the content amount of the constituent unit (D) is from 0.1 parts by mass to 1.0 part by mass with respect to 100 parts by mass of all the constituent units excluding the constituent unit (D)" contained in the pressure-sensitive adhesive layer of the disclosure is also referred to as a "specific (meth)acrylic resin".

Since the pressure-sensitive adhesive layer of the disclosure is a pressure-sensitive adhesive layer formed from the pressure-sensitive adhesive composition of the disclosure described above and contains the specific (meth)acrylic resin, the pressure-sensitive adhesive layer has high pressure-sensitive adhesive force even in a wet heat environment, is excellent in water resistance, and can withstand a load in a direction perpendicular to the bonding surface.

The thickness of the pressure-sensitive adhesive layer of the disclosure is not particularly limited.

The thickness of the pressure-sensitive adhesive layer of the disclosure is generally from 1 $\mu$m to 300 $\mu$m, preferably from 5 $\mu$m to 200 $\mu$m, and more preferably from 10 $\mu$m to 100 $\mu$m.

The "thickness of the pressure-sensitive adhesive layer" in the disclosure means the average thickness of the pressure-sensitive adhesive layer.

The average thickness of the pressure-sensitive adhesive layer is a value determined by the following method.

The thicknesses of 10 points randomly selected in the thickness direction of the pressure-sensitive adhesive layer are measured using a film thickness meter. The arithmetic average value of the measured values is determined, and the obtained value is taken as the average thickness of the pressure-sensitive adhesive layer.

[Method for Forming Pressure-sensitive Adhesive Layer]

The method for forming the pressure-sensitive adhesive layer of the disclosure is not particularly limited.

The pressure-sensitive adhesive layer of the disclosure can be formed by, for example, the following method.

The pressure-sensitive adhesive composition of the disclosure is applied onto a support (for example, a substrate and a release sheet) to form a coating film. Next, the formed coating film is dried, and thereby a pressure-sensitive adhesive layer is formed.

The method for applying the pressure-sensitive adhesive composition is not particularly limited.

Examples of the method for applying the pressure-sensitive adhesive composition include known methods using a gravure roll coater, a reverse roll coater, a kiss roll coater, a dip roll coater, a knife coater, a spray coater, a bar coater, an applicator, and the like.

The amount of the pressure-sensitive adhesive composition applied is not particularly limited, and is set according to, for example, the thickness of the pressure-sensitive adhesive layer to be formed, as appropriate.

The method for drying the coating film is not particularly limited.

Examples of the method for drying the coating film include methods such as natural drying, heating drying, hot air drying, and vacuum drying.

The drying temperature and the drying time of the coating film are not particularly limited, and are set according to the thickness of the coating film, the amount of water contained in the coating film, etc. as appropriate.

An example of the drying conditions is a condition of drying at from 70°C to 120°C for from 30 seconds to 180 seconds using a hot air circulation dryer.

[Pressure-sensitive Adhesive Sheet]

The pressure-sensitive adhesive sheet of the disclosure includes the pressure-sensitive adhesive layer of the disclosure.

Since the pressure-sensitive adhesive sheet of the disclosure includes the pressure-sensitive adhesive layer of the disclosure described above, the pressure-sensitive adhesive sheet has high pressure-sensitive adhesive force even in a wet heat environment, is excellent in water resistance, and can withstand a load in a direction perpendicular to the bonding surface. Thus, the pressure-sensitive adhesive sheet of the disclosure is suitable for use in water areas such as bathrooms, washrooms, kitchens, and toilets, and is particularly suitable as a pressure-sensitive adhesive sheet to be attached to top plates of furniture installed in the water areas, ceilings, or the like.

The pressure-sensitive adhesive sheet of the disclosure may be a substrate-free pressure-sensitive adhesive sheet having no substrate, or may be a substrate-including pressure-sensitive adhesive sheet including a pressure-sensitive adhesive layer on one surface or both surfaces of a substrate.

In the case in which the pressure-sensitive adhesive sheet of the disclosure is a substrate-free pressure-sensitive adhesive sheet having no substrate or a substrate-including pressure-sensitive adhesive sheet including a pressure-sensitive adhesive layer on one surface of a substrate, in the pressure-sensitive adhesive sheet of the disclosure, the exposed surface of the pressure-sensitive adhesive layer may be protected by a release sheet.

The release sheet is not particularly limited as long as it can be easily peeled off from the pressure-sensitive adhesive layer.

Examples of the release sheet include a resin film, paper, or synthetic paper of which one surface or both surfaces are subjected to surface treatment (what is called easy release treatment) with a release treatment agent, and a composite sheet in which two or more kinds of these are stacked. In the disclosure, a release sheet of an aspect in which one surface or both surfaces of a resin film are subjected to surface treatment (what is called easy release treatment) with a release treatment agent is also referred to as a "release film".

Examples of the release treatment agent include a silicone-based release treatment agent (for example, silicone), a wax-based release treatment agent (for example, paraffin wax), and a fluorine-based release treatment agent (for example, a fluorine-based resin).

Examples of the resin film include polyester films typified by a polyethylene terephthalate (PET) film.

Examples of the paper include high-quality paper and coated paper.

The film thickness of the release sheet is not particularly limited, and is generally from 20 $\mu$m to 180 $\mu$m.

The release sheet protects the surface of the pressure-sensitive adhesive layer until the pressure-sensitive adhesive tape is put into practical use, and is peeled off at the time of use.

In the case in which the pressure-sensitive adhesive sheet of the disclosure includes a substrate, the substrate is not particularly limited as long as a pressure-sensitive adhesive layer can be formed on the substrate.

Examples of the substrate include: a film containing a resin such as a polyolefin-based resin [for example, polyethylene (PE) or polypropylene (PP)], a polyester-based resin [for example, polyethylene terephthalate (PET)], an acetate-based resin (for example, a triacetyl cellulose resin), a polyethersulfone-based resin, a polycarbonate-based resin, a polyamide-based resin, a polyimide-based resin, a polyurethane-based resin, an acrylic resin, a vinyl chloride-based resin, an ABS (acrylonitrile butadiene styrene) resin, or a fluorine-based resin; paper (for example, high-quality paper or coated paper); synthetic paper; and a composite sheet in which two or more kinds of these are stacked.

The surface of the substrate on the side where the pressure-sensitive adhesive layer is to be provided may be subjected to surface treatment (what is called easy adhesion treatment) such as corona discharge treatment or plasma discharge treatment from the viewpoint of improving adhesion between the substrate and the pressure-sensitive adhesive layer.

The substrate may contain various additives such as a plasticizer, a colorant (for example, dye or pigment), a heat stabilizer, a light stabilizer, an antistatic agent, a flame retardant, and an antioxidant.

The substrate may be partially or entirely patterned.

The thickness of the substrate is not particularly limited, but is generally from 10 $\mu$m to 500 $\mu$m, preferably from 10 $\mu$m to 300 $\mu$m, more preferably from 10 $\mu$m to 200 $\mu$m, and still more preferably from 10 $\mu$m to 100 $\mu$m.

The "thickness of the substrate" in the disclosure means the average thickness of the substrate.

The average thickness of the substrate is a value determined by the following method.

The thicknesses of 10 points randomly selected in the thickness direction of the substrate are measured using a film thickness meter. The arithmetic average value of the measured values is determined, and the obtained value is taken as the average thickness of the substrate.

[Method for Producing Pressure-sensitive Adhesive Sheet]

The method for producing the pressure-sensitive adhesive sheet of the disclosure is not particularly limited.

The pressure-sensitive adhesive sheet of the disclosure can be produced by a known method.

Examples of the method of producing the pressure-sensitive adhesive sheet of the disclosure include the following methods.

In the case in which the pressure-sensitive adhesive sheet of the disclosure is a substrate-free pressure-sensitive adhesive sheet, first, the pressure-sensitive adhesive composition of the disclosure is applied to an easy release-treated surface of a release sheet to form a coating film on the release sheet. Next, the formed coating film is dried, and thereby a pressure-sensitive adhesive layer is formed on the release sheet. Next, the exposed surface of the formed pressure-sensitive adhesive layer is superimposed and stuck to an easy release-treated surface of a separately prepared release sheet; thereby, a substrate-free pressure-sensitive adhesive sheet having a stacked structure of release sheet/pressure-sensitive adhesive layer/release sheet can be produced.

In the case in which the pressure-sensitive adhesive sheet of the disclosure is a substrate-including pressure-sensitive adhesive sheet, first, the pressure-sensitive adhesive composition of the disclosure is applied to an easy adhesion-treated surface of a substrate to form a coating film on the substrate. Next, the formed coating film is dried, and thereby a pressure-sensitive adhesive layer is formed on the substrate. Next, the exposed surface of the formed pressure-sensitive adhesive layer is superimposed and stuck to an easy release-treated surface of a release sheet; thereby, a substrate-including pressure-sensitive adhesive sheet having a stacked structure of release sheet/pressure-sensitive adhesive layer/substrate can be produced.

In the case in which the pressure-sensitive adhesive sheet of the disclosure is a substrate-including pressure-sensitive adhesive sheet, examples of other methods include the following method.

The pressure-sensitive adhesive composition of the disclosure is applied to an easy release-treated surface of a release sheet to form a coating film on the release sheet. Next, the formed coating film is dried, and thereby a pressure-sensitive adhesive layer is formed on the release sheet. Next, the exposed surface of the formed pressure-sensitive adhesive layer is superimposed and stuck to an easy adhesion-treated surface of a substrate; thereby, a substrate-including pressure-sensitive adhesive sheet having a stacked structure of substrate/pressure-sensitive adhesive layer/release sheet can be produced.

The application method and the amount of coating of the pressure-sensitive adhesive composition, and the drying method, the drying temperature, and the drying time of the coating film are as described above, and a description is omitted herein.

EXAMPLES

The pressure-sensitive adhesive composition and the method for producing the same, and the pressure-sensitive adhesive layer of the disclosure will now be described more specifically by using Examples. As long as the gist of the disclosure is not exceeded, the disclosure is not limited to the following Examples.

[Production of (Meth)acrylic Resin Particles]

[Production Example A-1]

85.2 parts by mass (340.8 g) of n-butyl acrylate (n-BA) [an alkyl acrylate monomer], 10.0 parts by mass (40.0 g) of acrylonitrile (AN), and 4.8 parts by mass (19.2 g) of acrylic acid (AA) [an acrylic monomer having a carboxy group] were mixed to prepare a monomer mixture. 0.16 parts by mass [value on an active ingredient basis] (0.63 g) of AQUALON (registered trademark) AR-10 [trade name, manufactured by DKS Co., Ltd], which is an anionic reactive surfactant, 0.25 parts by mass [value on an active ingredient basis] (1.5 g) of ADEKAREASOAP (registered trademark) ER-30 [trade name, manufactured by ADEKA Corporation], which is an anionic reactive surfactant, 0.025 parts by mass (0.10 g) of N-dodecyl mercaptan [chain transfer agent], and 77.8 parts by mass (311.7 g) of ion-exchanged water were added to the prepared monomer mixture and stirring was performed, and thereby an emulsion X of a mixture containing monomer components and reactive surfactants was prepared.

Next, 33.1 parts by mass (132.7 g) of ion-exchanged water and 0.09 parts by mass [value on an active ingredient basis] (0.36 g) of AQUALON (registered trademark) AR-10 [trade name, manufactured by DKS Co., Ltd], which is an anionic reactive surfactant, were introduced into a reactor equipped with a thermometer, a stirrer, a sequential dropping device, a reflux condenser, and a nitrogen introduction tube, nitrogen was enclosed, and then the internal temperature was increased to 80°C. While the internal temperature of the reactor was kept at 80°C, 0.10 parts by mass [value on a solid content basis] (10.1 g) of an ammonium persulfate aqueous solution [polymerization initiator] having a concentration of 4 mass% and 0.10 parts by mass [value on a solid content basis] (10.1 g) of a sodium pyrosulfite aqueous solution [reducing agent] having a concentration of 4 mass% were added, and immediately the emulsion X previously prepared was continuously dropped for 3 hours to perform emulsion polymerization. In parallel with this operation, 0.56 parts by mass [value on a solid content basis] (56.9 g) of an ammonium persulfate aqueous solution [polymerization initiator] having a concentration of 4 mass% and 0.56 parts by mass [value on a solid content basis] (56.9 g) of a sodium pyrosulfite aqueous solution [reducing agent] having a concentration of 4 mass% were dropped into the reactor. After the dropping ended, 0.07 parts by mass [value on an active ingredient basis] (4.1 g) of a t-butyl hydroperoxide aqueous solution [polymerization initiator] having a concentration of 6.9 mass% and 0.07 parts by mass [value on an active ingredient basis] (4.1 g) of TEC LIGHT [trade name, active ingredient: thiourea dioxide, active ingredient concentration: 100 mass%, manufactured by ADEKA Corporation, reducing agent] having a concentration of 6.9 mass% were added to the resulting emulsion polymerization product, aging was performed at 80°C for 2 hours, and then cooling was performed to room temperature. After the cooling, ammonia water was added to adjust the pH to a range of from 2 to 5. After the pH adjustment, ion-exchanged water was added to adjust the concentration, and an aqueous dispersion of (meth)acrylic resin particles A-1 was obtained.

The obtained aqueous dispersion of (meth)acrylic resin particles A-1 had a solid content concentration of 40.6 mass% and a pH of 3.8.

The "solid content concentration" herein means the mass ratio of the (meth)acrylic resin particles A-1 to the aqueous dispersion of the (meth)acrylic resin particles A-1. The same applies to the aqueous dispersions of (meth)acrylic resin particles A-2 to A-22 produced below.

[Production Examples A-2 to A-9 and A-15 to A-18]

In Production Examples A-2 to A-9 and A-15 to A-18, aqueous dispersions of (meth)acrylic resin particles A-2 to A-9 and A-15 to A-18 were obtained, respectively, by performing similar operations to Production Example A-1 except that the composition of the (meth)acrylic resin particles was changed to the compositions shown in Table 1.

[Production Examples A-10 to A-14, A-19, A-20, and A-22]

In Production Examples A-10 to A-14, A-19, A-20, and A-22, aqueous dispersions of (meth)acrylic resin particles A-10 to A-14, A-19, A-20, and A-22 were obtained, respectively, by performing similar operations to Production Example A-1 except that the composition of the (meth)acrylic resin particles was changed to the compositions shown in Table 1 and the ratio between the amount of the reactive surfactant used for preparation of the emulsion X and the amount of the reactive surfactant to be introduced into the reactor, the stirring speed, etc. were changed as appropriate.

[Production Example A-21]

In Production Example A-21, it was attempted to produce (meth)acrylic resin particles A-21 by performing a similar operation to Production Example A-1 except that the composition of the (meth)acrylic resin particles was changed to the composition shown in Table 1, but it was impossible to polymerize monomer components and reactive surfactants.

The solid content concentrations of the aqueous dispersions of (meth)acrylic resin particles A-2 to A-20 and A-22 obtained in the above are shown below.

-Solid Content Concentration-

A-2: 40.6 mass%, A-3: 40.6 mass%, A-4: 40.6 mass%, A-5: 40.6 mass%, A-6: 40.6 mass%, A-7: 40.6 mass%, A-8: 40.6 mass%, A-9: 40.6 mass%, A-10: 25.0 mass%, A-11: 40.6 mass%, A-12: 40.6 mass%, A-13: 40.6 mass%, A-14: 40.6 mass%, A-15: 40.6 mass%, A-16: 40.6 mass%, A-17: 40.6 mass%, A-18: 40.6 mass%, A-19: 40.6 mass%, A-20: 50.0 mass%, A-22: 40.6 mass%

The pH's of the aqueous dispersions of (meth)acrylic resin particles A-2 to A-20 and A-22 obtained in the above are shown below. The pH's of the aqueous dispersions of (meth)acrylic resin particles A-1 to A-20 and A-22 were measured using a pH meter (trade name: F-51) manufactured by HORIBA, Ltd. under the condition of a liquid temperature of 25°C by a method conforming to JIS Z 8802: 2011.

-pH-

A-2: 3.8, A-3: 3.8, A-4: 3.8, A-5: 3.8, A-6: 3.8, A-7: 3.8, A-8: 3.8, A-9: 3.8, A-10: 2.5, A-11: 3.8, A-12: 3.8, A-13: 3.8, A-14: 3.8, A-15 : 3.8, A-16 : 3.8, A-17 : 3.8, A-18: 3.8, A-19: 3.8, A-20: 3.9, A-22: 3.5

The compositions (unit: parts by mass) of the (meth)acrylic resin particles A-1 to A-22, the glass transition temperatures (Tg, unit: °C) of the (meth)acrylic resin particles A-1 to A-20 and A-22, the average particle diameters (unit: nm) of the (meth)acrylic resin particles A-1 to A-20 and A-22, and the gel fractions (unit: mass%) of the (meth)acrylic resin particles A-1 to A-20 and A-22 are shown in Table 1.

The glass transition temperatures of the (meth)acrylic resin particles A-1 to A-20 and A-22 were measured by a similar method to the method for measuring the glass transition temperature of the specific (meth)acrylic resin particles described above. As the measurement apparatus, Discovery DSC 2500 (trade name) manufactured by TA Instruments Japan Inc. was used.

The average particle diameters of the (meth)acrylic resin particles A-1 to A-20 and A-22 were measured by a similar method to the method for measuring the average particle diameter of the specific (meth)acrylic resin particles described above. As the measurement apparatus, Laser Scattering Particle Size Distribution Analyzer LA-960 (trade name), which is a laser diffraction particle diameter distribution measurement apparatus manufactured by HORIBA, Ltd., was used.

The gel fractions of the (meth)acrylic resin particles A-1 to A-20 and A-22 were measured by a similar method to the method for measuring the gel fraction of the specific (meth)acrylic resin particles described above.

Among the (meth)acrylic resin particles A-1 to A-20 and A-22 obtained in the above, the (meth)acrylic resin particles A-1 to A-14 and A-22 correspond to the specific (meth)acrylic resin particles in the disclosure.

[Table 1]

| | (Meth)acrylic resin particles | | | | | | | | | | | | |
|---|---|---|---|---|---|---|---|---|---|---|---|---|---|
| | Composition [parts by mass] | | | | | | | | | | Tg [°C] | Average particle diameter [um] | Gel fraction [mass%] |
| | Monomer | | | | | | | Reactive surfactant | | | | | |
| | (A) | | | (B) | | (C) | Others | (D) | | | | | |
| | n-BA | 2EHA | MMA | AN | MAN | AA | HEAA | AR-10 | AR-20 | ER-30 | | | |
| A-1 | 85.2 | - | - | 100 | - | 4.8 | - | 0.25 | - | 0.25 | -28 | 110 | 60 |
| A-2 | 80.2 | - | - | 15.0 | - | 4.8 | - | 0.25 | - | 0.25 | -9 | 110 | 55 |
| A-3 | 70.2 | - | - | 25.0 | - | 4.8 | - | 0.25 | - | 0.25 | 10 | 110 | 50 |
| A-4 | 74.8 | - | - | 25.0 | - | 0.2 | - | 0.25 | - | 0.25 | 5 | 110 | 15 |
| A-5 | 74.0 | - | - | 25.0 | - | 1.0 | - | 0.25 | - | 0.25 | 6 | 110 | 25 |
| A-6 | 69.0 | - | - | 25.0 | - | 6.0 | - | 0.25 | - | 0.25 | 11 | 110 | 55 |
| A-7 | - | 75.2 | 5.0 | 15.0 | - | 4.8 | - | 0.25 | - | 0.25 | -59 | 110 | 41 |
| A-8 | 80.15 | - | - | 15.0 | - | 4.8 | 0.05 | 0.25 | - | 0.25 | -9 | 110 | 58 |
| A-9 | 80.2 | - | - | 15.0 | - | 4.8 | - | 0.50 | - | 0.50 | -12 | 110 | 65 |
| A-10 | 80.2 | - | - | 15.0 | - | 4.8 | - | 0.25 | - | 0.25 | -9 | 30 | 48 |
| A-11 | 80.2 | - | - | 15.0 | - | 4.8 | - | 0.25 | - | 0.25 | -9 | 160 | 63 |
| A-12 | 80.2 | - | - | 15.0 | - | 4.8 | - | 1.00 | - | - | -18 | 100 | 50 |
| A-13 | 80.2 | - | - | 15.0 | - | 4.8 | - | - | - | 1.00 | -18 | 130 | 50 |
| A-14 | 80.2 | - | - | 15.0 | - | 4.8 | - | - | 0.50 | 0.50 | -21 | 120 | 50 |
| A-15 | 90.2 | - | - | 5.0 | - | 4.8 | - | 0.25 | - | 0.25 | -39 | 110 | 65 |
| A-16 | 65.2 | - | - | 30.0 | - | 4.8 | - | 0.25 | - | 0.25 | 25 | 110 | 45 |
| A-17 | 78.5 | - | - | 15.0 | - | 6.5 | - | 0.25 | - | 0.25 | -7 | 110 | 60 |
| A-18 | 80.2 | - | - | 15.0 | - | 4.8 | - | 0.75 | - | 0.75 | -11 | 110 | 72 |
| A-19 | 80.2 | - | - | 15.0 | - | 4.8 | - | 0.25 | - | 0.25 | -9 | 180 | 65 |
| A-20 | 80.2 | - | - | 15.0 | - | 4.8 | - | 0.25 | - | 0.25 | -9 | 250 | 68 |
| A-21 | 80.2 | - | - | 15.0 | - | 4.8 | - | - | - | - | Polymerization impossible | | |

EP 4 455 245 A1

(continued)

| | (Meth)acrylic resin particles | | | | | | | | | | | | |
| | Composition [parts by mass] | | | | | | | | | | Tg [°C] | Average particle diameter [um] | Gel fraction [mass%] |
| | Monomer | | | | | | Others | Reactive surfactant | | | | | |
| | (A) | | | (B) | | (C) | | (D) | | | | | |
| | n-BA | 2EHA | MMA | AN | MAN | AA | HEAA | AR-10 | AR-20 | ER-30 | | | |
| A-22 | 85.2 | - | - | - | 15.0 | 4.8 | - | 0.25 | - | 0.25 | -7 | 120 | 53 |

Details of the monomer components and the reactive surfactants shown in Table 1 are as shown below. In Table 1, for the sake of convenience, components falling under the "alkyl (meth)acrylate monomer" are classified as "(A)", components falling under the "(meth)acrylonitrile" are classified as "(B)", components falling under the "(meth)acrylic monomer having a carboxy group" are classified as "(C)", components falling under the "(meth)acrylamide having a hydroxy group" are classified as "others", and components falling under the "reactive surfactant" are classified as "(D)".

The amounts of the reactive surfactants shown in Table 1 are values on an active ingredient basis.

<Alkyl (meth)acrylate monomer>

"n-BA": n-butyl acrylate
"2EHA": 2-ethylhexyl acrylate
"MMA": methyl methacrylate
<(Meth)acrylonitrile>
"AN": acrylonitrile
"MAN": methacrylonitrile
<(Meth)acrylic Monomer Having Carboxy Group>
"AA": acrylic acid
<(Meth)acrylamide Having Hydroxy Group>
"HEAA": N-(2-hydroxyethyl)acrylamide

<Reactive Surfactant>

"AR-10" [trade name: AQUALON (registered trademark) AR-10, active ingredient: ammonium polyoxyethylene styrenated propenylphenyl ether sulfate (type of the oxyalkylene group: an oxyethylene group, the average number of moles added: 10), active ingredient concentration: 99 mass%]

"AR-20" [trade name: AQUALON (registered trademark) AR-20, active ingredient: ammonium polyoxyethylene styrenated propenylphenyl ether sulfate (type of the oxyalkylene group: an oxyethylene group, the average number of moles added: 20), active ingredient concentration: 99 mass%]

"ER-30" [trade name: ADEKA REASOAP (registered trademark) ER-30, active ingredient: polyoxyethylene-1-(allyloxymethyl) alkyl ether (type of the oxyalkylene group: an oxyethylene group, the average number of moles added: 30), active ingredient concentration: 65 mass%]

In Table 1, "-" written in the section of composition means that the component corresponding to the section is not used.

[Preparation of Pressure-sensitive Adhesive Composition]

[Example 1]

100 parts by mass (value on a solid content basis) of the aqueous dispersion of (meth)acrylic resin particles A-1 obtained in the above, 0.32 parts by mass of ammonia water, 0.4 parts by mass (value on a solid content basis) of CP-101 [trade name, manufactured by San Nopco Limited] as an antifoaming agent, 0.2 parts by mass (value on a solid content basis) of SN-DEFOAMER 470 [trade name, manufactured by San Nopco Limited] as an antifoaming agent, 0.04 parts by mass (value on a solid content basis) of ACTICIDE (registered trademark) BW-20 [trade name, manufactured by THOR JAPAN Ltd.] as an antiseptic agent, 0.8 parts by mass (value on a solid content basis) of SURFYNOL (registered trademark) 440 [trade name, manufactured by Nissin Chemical Co., Ltd.] as a wetting agent, and 0.4 parts by mass (value on a solid content basis) of NIKASOL (registered trademark) VT-253A [trade name, manufactured by Nippon Carbide Industries Co., Inc.] as a thickener were mixed, then 1 part by mass (value on a solid content basis) of CARBODILITE (registered trademark) V-04 [trade name, a carbodiimide-based crosslinking agent, manufactured by Nisshinbo Chemical Inc.] was added as a crosslinking agent, and mixing was sufficiently performed; thus, a pressure-sensitive adhesive composition of Example 1 was prepared.

The content ratio of water in the obtained pressure-sensitive adhesive composition of Example 1 is 59.8 mass% with respect to the total mass of the pressure-sensitive adhesive composition.

[Examples 2 to 19]

In each of Examples 2 to 19, a pressure-sensitive adhesive composition of each of Examples 2 to 19 was prepared by performing a similar operation to Example 1 except that the composition of the pressure-sensitive adhesive composition was changed as shown in Table 2.

[Comparative Examples 1 to 6]

In each of Comparative Examples 1 to 6, a pressure-sensitive adhesive composition of each of Comparative Examples 1 to 6 was prepared by performing a similar operation to Example 1 except that the composition of the pressure-sensitive adhesive composition was changed as shown in Table 3.

The content ratios of water in the pressure-sensitive adhesive compositions of Examples 2 to 19 obtained in the above are shown below.

Example 2: 59.8 mass%, Example 3: 59.8 mass%, Example 4: 59.8 mass%, Example 5: 59.8 mass%, Example 6: 59.8 mass%, Example 7: 59.8 mass%, Example 8: 59.8 mass%, Example 9: 59.8 mass%, Example 10: 75.3 mass%, Example 11: 59.8 mass%, Example 12: 59.8 mass%, Example 13: 59.8 mass%, Example 14: 64.8 mass%, Example 15: 59.8 mass%, Example 16: 59.8 mass%, Example 17: 59.8 mass%, Example 18: 50.5 mass%, Example 19: 59.8 mass%

[Production of Pressure-sensitive Adhesive Sheet for Evaluation]

The pressure-sensitive adhesive composition prepared in the above was applied onto a release sheet [trade name: FILMBYNA (registered trademark) 100E-0010 No. 23, manufactured by Fujimori Kogyo Co., Ltd.] by using an applicator such that the amount of coating after drying was 25 g/m$^2$, and a coating film was formed. Next, the formed coating film was dried using a hot air circulation dryer under the conditions of a drying temperature of 105°C and a drying time of 90 seconds, and a pressure-sensitive adhesive layer was formed on the surface of the release sheet. Next, the exposed surface of the pressure-sensitive adhesive layer formed on the surface of the release sheet was superimposed and stuck to one surface of a polyethylene terephthalate (PET) film [trade name: TEIJIN (registered trademark) TETRON (registered trademark) FILM HPE, thickness: 50 μm, manufactured by Toyobo Film Solutions Ltd.] (hereinafter, simply referred to as "PET") as a substrate, and thereby a pressure-sensitive adhesive sheet for evaluation was produced. The produced pressure-sensitive adhesive tape for evaluation has a stacked structure of release sheet/pressure-sensitive adhesive layer/substrate (PET).

[Measurement and Evaluation]

1. Pressure-sensitive Adhesive Force

(1) Initial Pressure-sensitive Adhesive Force

The pressure-sensitive adhesive sheet for evaluation produced in the above was cut into a size of 25 mm × 100 mm to prepare a pressure-sensitive adhesive sheet piece for evaluation. The release sheet was peeled off from the prepared pressure-sensitive adhesive sheet piece for evaluation (configuration: substrate/pressure-sensitive adhesive layer/release sheet), and according to a method conforming to JIS Z 0237: 2009, the surface of the pressure-sensitive adhesive layer exposed by peeling was superimposed and pressure-bonded to a surface of SUS 304 (stainless steel plate, hereinafter simply referred to as "SUS") polished using #360 water-resistant abrasive paper prescribed in JIS R 6253: 2006; thus, a test piece was produced. The produced test piece was allowed to stand still in an environment of an atmosphere temperature of 23°C and 50%RH for 30 minutes. For the test piece after still standing, the pressure-sensitive adhesive sheet piece for evaluation (configuration: substrate/pressure-sensitive adhesive layer) was peeled off from the SUS at 180° in the long side (100 mm) direction; whereby the pressure-sensitive adhesive force (unit: N/25 mm) at the time of peeling was measured using, as a measurement apparatus, a single-column material testing machine (model number: STA-1225) manufactured by A&D Company, Limited under the condition of a peeling rate of 300 mm/min in an environment of an atmosphere temperature of 23°C and 50%RH.

When the measured value was 10 N/25 mm or more, the pressure-sensitive adhesive layer was determined to be one having high initial pressure-sensitive adhesive force. The measured values are shown in Tables 2 and 3.

(2) Pressure-sensitive Adhesive Force in Wet Heat Environment

The pressure-sensitive adhesive sheet for evaluation produced in the above was cut into a size of 25 mm × 100 mm to prepare a pressure-sensitive adhesive sheet piece for evaluation. The release sheet was peeled off from the prepared pressure-sensitive adhesive sheet piece for evaluation (configuration: substrate/pressure-sensitive adhesive layer/release sheet), and according to a method conforming to JIS Z 0237: 2009, the surface of the pressure-sensitive adhesive layer exposed by peeling was superimposed and pressure-bonded to a surface of SUS 304 (stainless steel plate, hereinafter simply referred to as "SUS") polished using #360 water-resistant abrasive paper prescribed in JIS R 6253: 2006; thus, a test piece was produced. The produced test piece was allowed to stand still in an environment of an atmosphere temperature of 23°C and 50%RH for 30 minutes, and was then allowed to stand still in an environment of an atmosphere temperature of 40°C and 90%RH for 7 days. After the still standing, the test piece was taken out in an environment of an atmosphere temperature of 23°C and 50%RH. For the test piece immediately after being taken out, the pressure-sensitive adhesive sheet piece for evaluation (configuration: substrate/pressure-sensitive adhesive layer) was peeled off from the SUS at 180° in the long side (100 mm) direction; whereby the pressure-sensitive adhesive force (unit: N/25 mm) at the time of peeling was measured using, as a measurement apparatus, a single-column material testing machine (model number: STA-1225) manufactured by A&D Company, Limited under the condition of a peeling rate of 300 mm/min in an environment of an atmosphere temperature of 23°C and 50%RH.

When the measured value was 15 N/25 mm or more, the pressure-sensitive adhesive layer was determined to be one having high pressure-sensitive adhesive force in a wet heat environment. The measured values are shown in Tables 2 and 3.

2. Water Resistance

The pressure-sensitive adhesive sheet for evaluation produced in the above was cut into a size of 25 mm × 100 mm to prepare a pressure-sensitive adhesive sheet piece for evaluation. The release sheet was peeled off from the prepared pressure-sensitive adhesive sheet piece for evaluation (configuration: substrate/pressure-sensitive adhesive layer/release sheet), and according to a method conforming to JIS Z 0237: 2009, the surface of the pressure-sensitive adhesive layer exposed by peeling was superimposed and pressure-bonded to a surface of SUS 304 (stainless steel plate) polished using #360 water-resistant abrasive paper prescribed in JIS R 6253: 2006; thus, a test piece was produced. The produced test piece was immersed in deionized water for 72 hours, was then taken out of the deionized water, and was allowed to stand still in an environment of an atmosphere temperature of 23°C and 50%RH for 1 hour. The test piece after still standing was visually observed, and was evaluated according to the following evaluation criteria. The evaluation results are shown in Tables 2 and 3.

In the following evaluation criteria, "A" and "B" are levels that pose no practical problems, and "A" is most preferable.

-Evaluation Criteria-

A: Neither swelling nor whitening of the pressure-sensitive adhesive layer was observed.
B: Swelling and/or whitening was observed only in an area within 5 mm from the end of the pressure-sensitive adhesive layer.
C: Swelling and/or whitening was observed in a large area of more than 5 mm from the end of the pressure-sensitive adhesive layer.

3. Load Bearing Capacity in Perpendicular Direction

The pressure-sensitive adhesive sheet for evaluation produced in the above was cut into a size of 25 mm × 100 mm to prepare a pressure-sensitive adhesive sheet piece for evaluation. A part of the release sheet was peeled off from the prepared pressure-sensitive adhesive sheet piece for evaluation (configuration: substrate/pressure-sensitive adhesive layer/release sheet) such that the size of the exposed portion of the pressure-sensitive adhesive layer was 25 mm × 80 mm. In an environment of an atmosphere temperature of 23°C and 50%RH, according to a method conforming to JIS Z 0237: 2009, the surface of the pressure-sensitive adhesive layer exposed by peeling was bonded to a surface of SUS 304 (stainless steel plate, hereinafter simply referred to as "SUS") polished using #360 water-resistant abrasive paper prescribed in JIS R 6253: 2006, and was then pressure-bonded by reciprocating a 2-kg roller once; thus, a test piece was produced. In the produced test piece, the size of the portion where the SUS and the pressure-sensitive adhesive layer are stuck to each other is 25 mm × 80 mm. The produced test piece was allowed to stand still in an environment of an atmosphere temperature of 23°C and 50%RH for 1 hour, and was then allowed to stand still in an environment of an atmosphere temperature of 40°C and 90%RH for 1 hour. Next, in an environment of an atmosphere temperature of 40°C and 90%RH, the SUS plate was kept horizontal such that the surface to which the pressure-sensitive adhesive sheet piece for evaluation was attached was on the lower side, a weight having a weight of 200 g was suspended on an end portion of the pressure-sensitive adhesive sheet piece for evaluation where the pressure-sensitive adhesive layer was not attached to the SUS, and standing was performed for 3 hours. After the standing, the length of the pressure-sensitive adhesive layer peeled off from the SUS was measured, and was evaluated according to the following evaluation criteria. The measured values and the evaluation results are shown in Tables 2 and 3.

In the following evaluation criteria, "A", "B", and "C" are levels that pose no practical problems, and "A" is most preferable.

-Evaluation Criteria-

A: Peeling of the pressure-sensitive adhesive sheet piece for evaluation was not observed.

B: Peeling of the pressure-sensitive adhesive sheet piece for evaluation was observed, but the peeling was within 35 mm.

C: Peeling of the pressure-sensitive adhesive sheet piece for evaluation was observed, but the peeling was more than 35 mm and within 55 mm.

D: The pressure-sensitive adhesive sheet piece for evaluation was peeled off so that the peeling was more than 55 mm, or the pressure-sensitive adhesive sheet piece for evaluation dropped.

[Table 2]

| | Composition of pressure-sensitive adhesive composition | | | | Measurement and evaluation | | | | |
| | (Meth)acrylic resin particles | | Crosslinking agent | | Pressure-sensitive adhesive force (to SUS) | | Water resistance (23°C × 72 hours) | Load bearing capacity in perpendicular direction (40°C, 90%RH) | |
| | | | | | Initial (23°C × 30 min) | In wet heat environment (40°C, 90%RH × 7 days) | | | |
| | Type | Blending amount [parts by mass] | Type | Blending amount [parts by mass] | Measured value [N/25 mm] | Measured value [N/25 mm] | Evaluation | Measured value [mm] | Evaluation |
|---|---|---|---|---|---|---|---|---|---|
| Example 1 | A-1 | 100 | V-04 | 1 | 15.0 | 34.0 | A | 53 | C |
| Example 2 | A-2 | 100 | V-04 | 1 | 17.0 | 35.0 | A | 45 | C |
| Example 3 | A-3 | 100 | V-04 | 1 | 18.0 | 36.5 | B | 35 | B |
| Example 4 | A-4 | 100 | V-04 | 1 | 14.0 | 42.5 | B | 50 | C |
| Example 5 | A-5 | 100 | V-04 | 1 | 18.5 | 39.6 | B | 42 | C |
| Example 6 | A-6 | 100 | V-04 | 1 | 16.0 | 35.0 | B | 25 | B |
| Example 7 | A-7 | 100 | V-04 | 1 | 13.5 | 21.5 | A | 50 | C |
| Example 8 | A-8 | 100 | V-04 | 1 | 16.0 | 30.7 | A | 49 | C |
| Example 9 | A-9 | 100 | V-04 | 1 | 17.5 | 35.2 | B | 53 | C |
| Example 10 | A-10 | 100 | V-04 | 1 | 19.0 | 40.0 | A | 40 | C |
| Example 11 | A-11 | 100 | V-04 | 1 | 17.0 | 34.5 | B | 46 | C |

(continued)

| | Composition of pressure-sensitive adhesive composition | | | | Measurement and evaluation | | | | |
| --- | --- | --- | --- | --- | --- | --- | --- | --- | --- |
| | (Meth)acrylic resin particles | | Crosslinking agent | | Pressure-sensitive adhesive force (to SUS) | | Water resistance (23°C × 72 hours) | Load bearing capacity in perpendicular direction (40°C, 90%RH) | |
| | | | | | Initial (23°C × 30 min) | In wet heat environment (40°C, 90%RH × 7 days) | | | |
| | Type | Blending amount [parts by mass] | Type | Blending amount [parts by mass] | Measured value [N/25 mm] | Measured value [N/25 mm] | Evaluation | Measured value [mm] | Evaluation |
| Example 12 | A-2 | 100 | V-04 | 3 | 16.5 | 28.0 | A | 34 | B |
| Example 13 | A-2 | 100 | V-04 | 5 | 15.0 | 25.8 | A | 0 | A |
| Example 14 | A-2 | 100 | WS-300 | 5 | 100 | 18.4 | A | 30 | B |
| Example 15 | A-3 | 100 | - | - | 13.5 | 43.0 | B | 51 | C |
| Example 16 | A-12 | 100 | V-04 | 1 | 17.0 | 33.5 | B | 53 | C |
| Example 17 | A-13 | 100 | V-04 | 1 | 17.3 | 34.6 | B | 53 | C |
| Example 18 | A-14 | 100 | V-04 | 1 | 16.5 | 35.0 | B | 53 | C |
| Example 19 | A-22 | 100 | V-04 | 3 | 15.0 | 25.0 | A | 0 | A |

[Table 3]

| | Composition of pressure-sensitive adhesive composition | | | | Measurement and evaluation | | | | |
| --- | --- | --- | --- | --- | --- | --- | --- | --- | --- |
| | (Meth)acrylic resin particles | | Crosslinking agent | | Pressure-sensitive adhesive force (to SUS) | | Water resistance (23°C × 72 hours) | Load bearing capacity in perpendicular direction (40°C, 90%RH) | |
| | | | | | Initial (23°C × 30 min) | In wet heat environment (40°C, 90%RH × 7 days) | | | |
| | Type | Blending amount [parts by mass] | Type | Blending amount [parts by mass] | Measured value [N/25 mm] | Measured value [N/25 mm] | Evaluation | Measured value [mm] | Evaluation |
| Comparative Example 1 | A-15 | 100 | V-04 | 1 | 14.5 | 32.0 | A | 75 | D |
| Comparative Example 2 | A-16 | 100 | V-04 | 1 | 18.5 | 37.0 | C | 23 | B |
| Comparative Example 3 | A-17 | 100 | V-04 | 1 | 15.5 | 33.5 | C | 22 | B |
| Comparative Example 4 | A-18 | 100 | V-04 | 1 | 17.5 | 34.5 | C | 47 | C |
| Comparative Example 5 | A-19 | 100 | V-04 | 1 | 16.0 | 33.0 | C | 46 | C |
| Comparative Example 6 | A-20 | 100 | V-04 | 1 | 14.3 | 28.5 | C | 54 | C |

EP 4 455 245 A1

30

Details of the crosslinking agents shown in Table 2 and/or Table 3 are as shown below.

<Crosslinking Agent>

"V-04" [trade name: CARBODILITE (registered trademark) V-04, a carbodiimide-based crosslinking agent, manufactured by Nisshinbo Chemical Inc.]

"WS-300" [trade name: EPOCROS (registered trademark) WS-300, an oxazoline-based crosslinking agent, manufactured by Nippon Shokubai Co., Ltd.]

In Table 2, "-" written in the section of composition means that the component corresponding to the section is not used.

As shown in Table 2, it has been found that the pressure-sensitive adhesive layer formed from the pressure-sensitive adhesive composition of each of the Examples is a pressure-sensitive adhesive layer that has high initial pressure-sensitive adhesive force and high pressure-sensitive adhesive force in a wet heat environment, is excellent in water resistance, and can withstand a load in a direction perpendicular to the bonding surface.

In contrast, as shown in Table 3, it has been found that the pressure-sensitive adhesive layer formed from the pressure-sensitive adhesive composition of each of the Comparative Examples, although it has high initial pressure-sensitive adhesive force and high pressure-sensitive adhesive force in a wet heat environment, is inferior in terms of either water resistance or load bearing capacity in the perpendicular direction to the pressure-sensitive adhesive layers formed from the pressure-sensitive adhesive compositions of the Examples.

The disclosures of Japanese Patent Application No. 2021-206276, filed December 20, 2021, and Japanese Patent Application No. 2022-076759, filed May 6, 2022, are incorporated herein by reference in their entirety.

All publications, patent applications, and technical standards mentioned in this specification are herein incorporated by reference to the same extent as if each individual publication, patent application, or technical standard was specifically and individually indicated to be incorporated by reference.

**Claims**

**1.** A pressure-sensitive adhesive composition, comprising:

(meth)acrylic resin particles having an average particle diameter of from 5 nm to 160 nm and containing a constituent unit (A) derived from an alkyl (meth)acrylate monomer, a constituent unit (B) derived from (meth)acrylonitrile, a constituent unit (C) derived from a (meth)acrylic monomer having a carboxy group, and a constituent unit (D) derived from a reactive surfactant, in which a content ratio of the constituent unit (B) is from 10 mass% to 25 mass% with respect to all the constituent units excluding the constituent unit (D), a content ratio of the constituent unit (C) is from 0.2 mass% to 6.0 mass% with respect to all the constituent units excluding the constituent unit (D), and a content amount of the constituent unit (D) is from 0.1 parts by mass to 1.0 part by mass with respect to 100 parts by mass of all the constituent units excluding the constituent unit (D); and water.

**2.** The pressure-sensitive adhesive composition according to claim 1, further comprising a crosslinking agent.

**3.** The pressure-sensitive adhesive composition according to claim 2, wherein the crosslinking agent is at least one selected from a carbodiimide-based crosslinking agent or an oxazoline-based crosslinking agent.

**4.** The pressure-sensitive adhesive composition according to claim 1, wherein the reactive surfactant is at least one selected from the group consisting of an anionic reactive surfactant and a nonionic reactive surfactant.

**5.** The pressure-sensitive adhesive composition according to claim 1, wherein the (meth)acrylic resin particles are free of a constituent unit derived from a (meth)acrylamide having a hydroxy group, or have a content ratio of a constituent unit derived from a (meth)acrylamide having a hydroxy group in a range of from more than 0 mass% to less than 0.1 mass% with respect to all the constituent units excluding the constituent unit (D) of the (meth)acrylic resin particles.

**6.** The pressure-sensitive adhesive composition according to claim 1, wherein a glass transition temperature of the (meth)acrylic resin particles is from -70°C to 30°C.

7. A pressure-sensitive adhesive layer formed from the pressure-sensitive adhesive composition according to any one of claims 1 to 6, the pressure-sensitive adhesive layer comprising a (meth)acrylic resin containing a constituent unit (A) derived from an alkyl (meth)acrylate monomer, a constituent unit (B) derived from (meth)acrylonitrile, a constituent unit (C) derived from a (meth)acrylic monomer having a carboxy group, and a constituent unit (D) derived from a reactive surfactant, in which a content ratio of the constituent unit (B) is from 10 mass% to 25 mass% with respect to all the constituent units excluding the constituent unit (D), a content ratio of the constituent unit (C) is from 0.2 mass% to 6.0 mass% with respect to all the constituent units excluding the constituent unit (D), and a content amount of the constituent unit (D) is from 0.1 parts by mass to 1.0 part by mass with respect to 100 parts by mass of all the constituent units excluding the constituent unit (D).

8. A pressure-sensitive adhesive sheet, comprising the pressure-sensitive adhesive layer according to claim 7.

9. A method for producing the pressure-sensitive adhesive composition according to any one of claims 1 to 6, the method comprising a step of producing (meth)acrylic resin particles by performing emulsion polymerization of at least an alkyl (meth)acrylate monomer, (meth)acrylonitrile, a (meth)acrylic monomer having a carboxy group, and a reactive surfactant using a chain transfer agent.

## INTERNATIONAL SEARCH REPORT

| | International application No. |
|---|---|
| | **PCT/JP2022/041379** |

**A. CLASSIFICATION OF SUBJECT MATTER**

*C09J 133/06*(2006.01)i; *C09J 7/38*(2018.01)i; *C09J 11/06*(2006.01)i; *C09J 133/20*(2006.01)i
FI: C09J133/06; C09J133/20; C09J11/06; C09J7/38

According to International Patent Classification (IPC) or to both national classification and IPC

**B. FIELDS SEARCHED**

Minimum documentation searched (classification system followed by classification symbols)

C09J133/06; C09J7/38; C09J11/06; C09J133/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-12216 A (TOAGOSEI CO., LTD.) 20 January 2011 (2011-01-20) entire document | 1-9 |
| A | JP 2002-80809 A (SHOWA HIGHPOLYMER CO., LTD.) 22 March 2002 (2002-03-22) entire document | 1-9 |
| A | JP 2000-109784 A (TOAGOSEI CO., LTD.) 18 April 2000 (2000-04-18) entire document | 1-9 |
| A | JP 7-26229 A (NIPPON CARBIDE KOGYO KABUSHIKI KAISHA) 27 January 1995 (1995-01-27) entire document | 1-9 |
| A | JP 63-86777 A (JAPAN SYNTHETIC RUBBER CO., LTD.) 18 April 1988 (1988-04-18) entire document | 1-9 |
| A | JP 2013-49742 A (EMULSION TECHNOLOGY CO., LTD.) 14 March 2013 (2013-03-14) entire document | 1-9 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 December 2022** | **10 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/041379**

| Patent document<br>cited in search report | | | Publication date<br>(day/month/year) | Patent family member(s) | | | Publication date<br>(day/month/year) |
|---|---|---|---|---|---|---|---|
| JP | 2011-12216 | A | 20 January 2011 | (Family: none) | | | |
| JP | 2002-80809 | A | 22 March 2002 | (Family: none) | | | |
| JP | 2000-109784 | A | 18 April 2000 | US<br>entire document<br>EP | 6156378<br><br>978551 | A<br><br>A1 | |
| JP | 7-26229 | A | 27 January 1995 | (Family: none) | | | |
| JP | 63-86777 | A | 18 April 1988 | (Family: none) | | | |
| JP | 2013-49742 | A | 14 March 2013 | (Family: none) | | | |

Form PCT/ISA/210 (patent family annex) (January 2015)

**EP 4 455 245 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010209170 A
- JP 2009057508 A
- JP 2021206276 A
- JP 2022076759 A